# EUROPÄISCHE PATENTSCHRIFT

(11) **EP 1 521 928 B1**
(45) Veröffentlichungstag und Bekanntmachung des Hinweises auf die Patenterteilung: **02.01.2008**
(21) Anmeldenummer: 03763775.8
(22) Anmeldetag: 09.07.2003
(51) Int. Cl.: F16H 63/08

(54) **SCHALTVORRICHTUNG**
SHIFTING DEVICE
DISPOSITIF DE CHANGEMENT DE VITESSES

(30) Priorität: 11.07.2002 DE 10231547
(43) Veröffentlichungstag der Anmeldung: 13.04.2005
(73) Patentinhaber: ZF FRIEDRICHSHAFEN AG, 88038 Friedrichshafen (DE)
(72) Erfinder: EBENHOCH, Michael, 88045 Friedrichshafen (DE); FLÜCKIGER, Martin, 97421 Schweinfurt (DE)
(86) Internationale Anmeldenummer: PCT/EP2003/007434
(87) Internationale Veröffentlichungsnummer: WO 2004/008005

(56) Entgegenhaltungen:
- DE-A- 2 262 892
- DE-A- 3 527 390
- DE-A- 10 119 748
- DE-A- 10 133 695
- FR-A- 2 815 103

## Beschreibung

Die Erfindung bezieht sich auf eine Schaltvorrichtung, insbesondere für ein mehrstufiges Getriebe, bei dem mindestens einem Schaltpaket zwei Gänge zugeordnet sind, wobei die einem Schaltpaket benachbart angeordneten zwei Übersetzungsstufen keine aufeinander folgenden Gänge sind, und dass als Betätigung ein Schalthebel vorgesehen ist.

Es sind bereits Kraftfahrzeuggetriebe bekannt (z. B. DE 41 37 143 A1), bei denen ein mehrstufiges, synchronisiertes Vorgelegegetriebe beschrieben wurde, und bei dem jeweils zwei Gänge einem der mehreren Schaltpakete zugeordnet sind. Hierbei sind die einem Schaltpaket zugeordneten zwei Gänge (1. und 3. bzw. 2. und 4.) nicht aufeinander folgende Gänge. Es entsteht dabei der Vorteil, dass ein Schaltsystem erhalten wird, bei welchem überschneidende Betätigungen und damit eine Verringerung der Schaltnebenzeiten ermöglicht wird. Nachteilig ist jedoch, dass mit einem herkömmlichen Handschalter dieses Getriebe nicht schaltbar ist, da der Handschalter in herkömmlicher H-Schaltung z. B. lediglich aufeinander folgende Gänge schalten kann.

Weiterhin ist ein Zwölfgang-Schaltgetriebe für Nutzfahrzeuge bekannt (z. B. EP 10 34 384 B1), bei welchem die Vorschaltgruppe manuell geschaltet wird und die Hauptgruppe bzw. Nachschaltgruppe automatisch pneumatisch geschaltet wird. Für die Hauptgruppe und die Nachschaltgruppe sind pneumatische Schalteinrichtungen vorgesehen, die beim Wählen mittels der manuellen Schalteinrichtung der Gasse des gewünschten Ganges entsprechend aktiviert werden. Damit entspricht das erzielte Schaltbild dem eines üblichen 6-Gang-Schaltgetriebes. Nachteilig hierbei ist jedoch, dass separate, pneumtische Schalteinrichtungen vorgesehen werden müssen, um die Gänge in gewohnter Weise in einem üblichen Schaltbild schalten zu können.

Weiterhin ist aus der deutschen Patentschrift der Anmelderin eine Schalteinrichtung für ein Kraftfahrzeuggetriebe bekannt (z. B. DE 30 00 577), bei welchem mit einem Handschalthebel nach einem HH-Schaltbild geschaltet wird. Hierbei sind auf der Schaltwelle zwei Schaltfinger angeordnet, wobei jeweils nur ein Schaltfinger die vier Gänge des Grundgetriebes schaltet. Beim Wechsel von der zweiten in die dritte Gasse wird ein Schaltventil betätigt, welches die Bereichsgruppe schaltet. Beim Schalten in der dritten und vierten Gasse ist dann der zweite Schaltfinger im Eingriff. Nachteilig ist auch hier die separate Aktuatorik der Bereichsgruppe.

Aus der DE 35 27 390 A1 ist ein handgeschaltetes Doppelkupplungsgetriebe bekannt. Hierbei werden bei Betätigung des Ganghebels in der Wählgasse die Schaltmuffen verschoben. Durch Betätigung des Schalthebels in einer Schaltgasse wird jeweils eine Kupplung der Doppelschaltkupplung geschlossen. Nachteilig bei dieser Schalteinrichtung ist die Beschränkung auf lediglich vier Vorwärtsgänge, wenn rein manuell ohne Fremdkraftunterstützung geschaltet werden soll.

Eine weitere Druckschrift DE 101 33 695 A1 betrifft ein Doppelkupplungsgetriebe in Verbindung mit einer Elektromaschine sowie ein Verfahren zum Betrieb dieses Getriebes.

Außerdem ist aus der FR 2 815 103, welche als nächst kommender Stand der Technik angenommen wird, eine Schaltvorrichtung bekannt, welche partiell am Umfang einer Schaltwelle angeordnete Zähne aufweist und diese Zähne mit Zahnstangen zusammenwirken.

Hiervon ausgehend ist es Aufgabe der Erfindung, ein Kraftfahrzeuggetriebe, insbesondere ein mehrstufiges Getriebe, bei dem mindestens einem Schaltpaket keine aufeinanderfolgenden Übersetzungsstufen zugeordnet sind, derart weiterzubilden, dass eine manuelle Betätigung mittels herkömmlicher H-Schaltung möglich ist und die Bedienung vereinfacht wird.

Zur Lösung dieser Aufgabe ist erfindungsgemäß vorgesehen, dass zwischen dem Schalthebel und mindestens dem Schaltpaket, welchem zwei nicht aufeinanderfolgende Gänge zugeordnet sind, eine handgesteuerte Konvertierungsvorrichtung vorgesehen ist, welche bei Betätigung des Schalthebels eine Bewegung eines Schaltmittels erzeugt, welches eine dem geschalteten Gang entsprechende Übersetzungsstufe einlegt.
Vorzugsweise ist die Konvertierungsvorrichtung derart ausgebildet, dass eine Bewegung des Schalthebels abhängig von dessen Stellung im Schaltbild in eine Bewegung von mindestens einem Schaltmittel umgesetzt wird. Dabei können gleiche Bewegungen des Schalthebels in unterschiedlichen Schalthebelstellungen in dessem Schaltbild unterschiedliche Bewegungen, insbesondere Bewegungsrichtungen, des in dieser Schaltstellung mit dem Schalthebel verbundenen Schaltmittel bewirken. Die Konvertierungsvorrichtung ist erfindungsgemäß derart ausgebildet, dass sie die Umsetzung der Bewegung des Schalthebels in eine von der Bewegungsrichtung des Schalthebels entkoppelte Bewegungsrichtung der Schaltmittel steuermittelfrei umsetzt. Das bedeutet, dass zur Umsetzung der Schalthebelbewegung in die Schaltmittelbewegung in Abhängigkeit der Schalthebelposition im Schaltbild keine bspw. elektronische Steuerlogik vonnöten ist.

Nach einem weiteren wesentlichen Merkmal ist vorgesehen, dass der Schalthebel mit einer Schaltfingerwelle verbunden ist und diese mittels des Schalthebels axial verschiebbar und radial verschwenkbar ist. Eine vorteilhafte Ausgestaltung sieht hierbei vor, den Schalthebel starr mit der Schaltfingerwelle zu verbinden.

Erfindungsgemäß ist vorgesehen, dass jeder Schaltfingerwelle ein oder mehrere Schaltfinger zugeordnet sind. Vorteilhaft ist hierbei, dass die Schaltfinger unterschiedlich ausgebildet sein können. Damit können unterschiedliche Übersetzungsverhältnisse des Schalthebels beim Einlegen verschiedener Gänge realisiert werden. Damit kann die Kraftübersetzung, welche auf die Synchronisierungen wirkt optimiert werden, womit einfachere Synchronelement verwendet werden können.

Vorteilhafterweise sind die Schaltfinger auf der Schaltfingerwelle derart angeordnet, dass die Schaltfinger in Neutralposition des Schalthebels nicht senkrecht zu den Schaltstangen verlaufen, sondern schräg zur Längsachse der Schaltstangen angeordnet sind.

Beim Schwenken des betreffenden Schaltfingers in eine Richtung wird die Schaltstange bzw. das Schaltpaket betätigt und beim Schwenken des Schaltfingers in die entgegengesetzte Richtung geht der Schaltfinger frei und die Schaltstange wird nicht betätigt, wobei vorteilhafterweise die Schaltstange mit dem Schaltfinger kinematisch gekoppelt ist, bis wieder die Neutralposition erreicht ist.

Je nach Zweckmäßigkeit kann die Konvertierungsvorrichtung direkt oder indirekt als Verbindung zwischen dem Schalthebel und dem Schaltpaket, dem zwei nicht aufeinanderfolgende Gänge zugeordnet sind, ausgebildet sein. Eine Ausgestaltung der Erfindung sieht zum Beispiel bei Verwendung der Erfindung in einem Bus, in weichem der Schalthebel vom, im Fahrzeugheck sich befindlichem, Getriebe distanziert angebracht ist, eine indirekte Ausgestaltung der Konvertierungsvorrichtung vor, mittels welcher die Bewegungen des Schalthebels mechanisch, mit Schaltstangen oder Seilzug, oder aber auch elektromechanisch, pneumatisch, oder auch hydraulisch übertragen werden. Eine Ausführungsform einer mechanischen Konvertierungsvorrichtung sieht vor die Konvertierungsvorrichtung als Schaltgestänge oder als Kabel- oder Seilschaltung auszugestalten. Besonders vorteilhaft kann sich aber auch eine Kombination der verschiedenen Ausgestaltungen erweisen.

Vorteilhaft ist bei dieser Ausbildung, dass bei Verwendung eines herkömmlichen Schalthebels mit einem herkömmlichen Schaltbild oder einer herkömmlichen Schaltkulisse die Anordnung der Übersetzungsstufen in dem Kraftfahrzeuggetriebe unabhängig ist.

Eine weitere günstige Ausführungsform sieht vor, dass dem Schalthebel ein Schaltbild zugeordnet ist, welches als H oder Mehrfach-H ausgebildet ist, bei denen sich im wesentlichen Schaltstellungen benachbarter Übersetzungsstufen gegenüberliegen.

Nach einer weiteren günstigen Ausführungsform ist vorgesehen, dass der Schalthebel innerhalb mindestens einer Schaltgasse aufeinander folgende Übersetzungsstufen des Getriebes schalten kann, wobei mindestens eine der Übersetzungsstufen mittels eines Schaltpaketes, welchem zwei nicht aufeinander folgende Übersetzungsstufen angeordnet sind, geschaltet wird.

Eine bevorzugte Ausführungsform sieht vor, dass jeder Schaltgasse mindestens zwei Schaltpakete zugeordnet sind.

Nach einem weiteren wesentlichen Merkmal ist vorgesehen, dass bei Verschieben des Schalthebels in einer Wählgasse des Schaltbildes mindestens zwei Schaltpakete mittels Schaltstangen mit dem Schalthebel gleichzeitig verbindbar sind. In einer weiteren vorteilhaften Ausführungsform sind mindestens zwei Schaltpakete mittels Schaltauslegern gleichzeitig verbindbar. Vorteilhaft ist hierbei, dass in einer Schaltgasse gegenüberliegende Gänge keine benachbarten Getriebsufen zugeordnet sein müssen. Besonders vorteilhaft ist, dass die Einlegerichtungen der Schaltpakete der beiden Gänge nicht gegenläufig sein müssen.

Erfindungsgemäß ist vorgesehen, dass mit der Schaltfingerwelle mindes tens eine weitere Schaltfingerwelle gekoppelt ist. Eine besonders bevorzugte Ausgestaltung der Kopplung sieht vor, die Schaltfingerwellen mittels drehfest auf den Schaltfingerwellen angebrachten Zahnrädern zu koppeln. Bei Verwendung von mehr als zwei Schaltfingerwellen sieht eine vorteilhafte bauraumoptimierte Ausgestaltung die Anordnung der Schaltfingerwellen in mehr als einer Ebene vor. Die Kopplung verschiedener Schaltfingerwellen eröffnet den wesentlichen Vorteil, bei Verbindung eines Schaltpaketes mit dem Schalthebel, die entsprechende Schaltposition im Schaltbild frei wählen zu können. Es kann jedoch auch zweckmäßig sein, die Schaltfingerwellen entkoppelbar zu machen. Es kann z. B. eine Entkopplung mittels des Schalthebels stattfinden, indem der Schalthebel längs seiner Achse gezogen oder gedrückt wird; oder aber es kann bei seitlichem Verschieben entlang der Wählgasse eine automatische Entkopplung der Schaltfingerwellen stattfinden. Damit ergeben sich weitere Freiheitsgrade der Schalteinrichtung, welche z. B. zum Vorwählen oder zur Verkürzung von Schaltzeiten genutzt werden können. Somit kann ein mittels der entkoppelten Schaltfingerwelle eingelegter Gang bei einer Schalt und/oder Wählbewegung beibehalten werden und mittels der mit dem Schalthebel verbundenen Schaltfingerwelle eine Gruppe geändert werden,

Nach einem weiteren wesentlichen Merkmal ist vorgesehen, dass die Schaltfingerwellen derart gekoppelt sind, dass eine Wählbewegung des Schalthebels alle Schaltfingerwellen parallel verschiebt und/oder eine Schaltbewegung des Schalthebels benachbarte Schaltfingerwellen gegensinnig verdreht. Vorteilhaft ist hierbei, dass eine definierte Schaltrichtung des Schalthebels in einer Schaltgasse die Drehrichtung der Schaltfingerwellen nicht einschränkt. Die Verwendung nur einer Schaltfingerwelle bei herkömmlichen Schalteinrichtungen gibt bei Bewegung des Schalthebels die Bewegungsrichtung eines auf der Schaltfingerwelle befestigten Elements in eine bestimmte Richtung abhängig von der Bewegungsrichtung des Schalthebels vor.

Je nach Anordnung der Übersetzungsstufen im Getriebe ist vorgesehen, dass in mindestens einer Schaltgasse mindestens zwei Schaltfinger verschiedener Schaltfingerwellen in verschiedene Schaltstangen eingreifen. Damit ist erfindungsgemäß die räumliche Distanz zweier Schaltpakete und der zugehörigen Schaltstangen von der Stellung des Schalthebels innerhalb der Schaltkulisse entkoppelt. Sind die Schaltpakete der sich in einer gemeinsamen Schaltgasse befindlichen Gänge derart angeordnet, dass sie beide zum Einlegen des Ganges mittels Schaltmitteln in die gleiche Richtung verschoben werden müssen, ist mittels der erfindungsgemäßen Zuordnung der im Eingriff befindlichen Schaltfinger eine gegensinnige Betätigungsrichtung des Schalthebels zum Einlegen der zwei Gänge gegeben.

Nach einem weiteren wesentlichen Merkmal ist vorgesehen, dass beim Verdrehen der Schaltfingerwelle in einer Drehrichtung mindestens ein Schaltfinger der einen Schaltfingerwelle außer Eingriff der einen Schaltstange gebracht wird und mindestens ein anderer Schaltfinger der anderen Schaltfingerwelle die andere Schaltstange verschiebt. Besonders vorteilhaft ist hierbei, dass bei Betätigung des Schalthebels in eine Schaltposition einer Schaltgasse nur eine Schaltstange und damit nur ein Gang geschaltet wird, ohne den anderen Schaltfinger axial verschieben zu müssen, um ihn von der Schaltfingerwelle zu entkoppeln.

Erfindungsgemäß ist die Schalteinrichtung derart ausgebildet, dass beim Verdrehen der Schaltfingerwelle in gegensinnger Drehrichtung mindestens ein Schaltfinger der anderen Schaltfingerwelle außer Eingriff der anderen Schaltstange gebracht wird und mindestens ein Schaltfinger der einen Schaltfingerwelle die eine Schaltstange verschiebt.
Sind die beiden Gänge einer Schaltgasse verschiedenen Schaltpaketen zugeordnet, und außerdem zum Einlegen der betreffenden Gange in gegensätzlicher Richtung zu verschieben, sind die Schaltfinger, welche die Schaltmittel betätigen erfindungsgemäß auf derselben Schaltfingerwelle angeordnet. Nach einem wesentlichen Merkmal ist hierbei vorgesehen, dass beim Verdrehen der Schaltfingerwelle in einer Drehrichtung mindestens ein Schaltfinger der einen Schaltfingerwelle außer Eingriff der einen Schaltstange gebracht wird und mindestens ein anderer Schaltfinger der selben Schaltfingerwelle die andere Schaltstange verschiebt.

Die Erfindung bezieht sich darüber hinaus nicht nur auf die Betätigung von Schaltpaketen, denen nicht benachbarte Gänge zugeordnet sind, vielmehr erlaubt sie zudem die Betätigung eines Schaltpaketes mittels eines Schaltfingers in beide Richtungen, wobei jedoch über die Möglichkeiten einer herkömmlichen Schaltvorrichtung hinaus, die Anordnung der beiden Gänge in einer Schaltgasse, je nach Zuordnung des Schaltfingers zu einer der Schaltfingerwellen, getauscht werden können.

Weiter kann bei Verwendung mehrerer Schaltfinger vorgesehen sein, insbesondere bei spezieller Zuordnung eines Schaltfingers zu nur einem oder weniger Schaltpakete, die Kontur, vorzugsweise die Länge, der Schaltfinger auf das gewünschte Kraftübersetzungsverhätnis des einzulegenden Ganges zu optimieren.

Zur Übertragung der Bewegung des Schalthebels auf die den Übersetzungsstufen zugeordneten Schaltpaketen sind in einer Ausgestaltung der Erfindung Schaltmittel mit wenigstens einem Zahnsegment und einer zugehörigen Zahnstange vorgesehen.

Alternativ zu der vorbeschriebenen Invertierungsvorrichtung mit zwei Schaltfingerwellen kann die Invertierungsvorrichtung auch im wesentlichen aus einer Schaltfingerwelle mit mehreren Schaltstangen bestehen, wobei die Schaltfingerwelle im wesentlichen rechtwinklig zu den Schaltstangen angeordnet ist. Damit entfällt vorteilhafterweise die bei der vorbeschriebenen Version mit zwei Schaltfingerwellen notwendige Übertragung einer Drehbewegung von der ersten auf die zweite Schaltfingerwelle, beispielsweise mittels Zahnräder.

Vorteilhafterweise sind die Schaltstangen im wesentlichen in zwei Ebenen auf gegenüberliegenden Seiten der Schaltfingerwelle angeordnet. Außerdem sind auf der Schaltfingerwelle Schaltfinger vorgesehen, welche mit den Schaltnuten in den Schaltstangen zusammenwirken, so dass jede beliebige geometrische Kombination der Schaltfinger mit den Schaltnuten in den Schaltstangen sowie jede beliebige, technisch sinnvolle Bewegungsrichtung der Schaltstangen realisierbar ist.

Der Schalthebel ist ebenfalls, wie bereits beschrieben, starr mit der Schaltfingerwelle verbunden, so dass eine Bewegung des Schalthebels durch den Fahrer in eine unmittelbare Bewegung der Schaltfingerwelle und somit der Schaltstangen umsetzbar ist.

Zum Einlegen eines Gangs durch Betätigung des Schalthebels ist der betreffende Schaltfinger in eine Position schwenkbar, welche im wesentlichen senkrecht zur Schaltstange angeordnet ist. Dadurch wird erreicht, dass sich vorteilhafterweise jeweils nur ein Schaltfinger im Eingriff mit einer Schaltnut befindet, während die übrigen Schaltfinger sich nicht im Eingriff mit den zugehörigen Schaltelementen befinden.

Besonders vorteilhaft ist gemäß der vorbeschriebenen Ausbildung der Schaltvorrichtung, dass nur ein Schaltfinger zum Ein- und Auslegen eines Gangs erforderlich ist.

In einer weiteren vorteilhaften Ausbildung ist ein Schaltfinger derart angeordnet, dass er zur Betätigung eines Schaltpaketes bzw. zum Ein- und Auslegen von zwei Gängen vorgesehen ist, d. h., dass beispielsweise vier Gänge mit zwei Schaltfingern schaltbar sind.

Anstelle der beschriebenen verschiebbaren Schaltstangen kann eine Konvertierungsvorrichtung auch feststehende Schaltstangen enthalten, auf denen vorteilhafterweise verschiebbare Schaltmuffen angeordnet sind.

Die beschriebene Schaltvorrichtung ist handgesteuert und/oder steuermittelfrei ausgebildet, so dass beispielsweise eine elektronische Steuervorrichtung zur Betätigung der Schaltvorrichtung nicht erforderlich ist.

Die Erfindung betrifft ferner Kraftfahrzeuggetriebe, wobei in dem Getriebe mindestens einem Schaltpaket zwei nicht aufeinanderfolgende Übersetzungsstufen zugeordnet sind, welche mittels einer Schaltvorrichtung handschaltbar sind, wobei ein Schalthebel zur Betätigung der Schaltpakete vorgesehen ist und dass dem Schalthebel ein Schaltbild zugeordnet ist, bei dem sich im wesentlichen die Schaltstellungen je zwei aufeinander folgender Gänge in Schaltgassen gegenüberliegen und dass die innerhalb einer Schaltgasse auswählbaren Gänge unterschiedlichen Schaltpaketen zugeordnet sind.

Die Erfindung der vorgestellten Schaltungsaktuatorik ermöglicht es, Kraftfahrzeuggetriebe, die bisher als nicht handschaltbar galten, handschaltbar zu machen. Somit kann z. B. auch der Radsatz eines Doppelkupplungsgetriebes, vorzugsweise eines lastschaltbaren Doppelkupplungsgetriebes, als Handschaltgetriebe abgeleitet werden. Die wesentlichen Komponenten des Getriebes (Radsatz, Gehäuse, innere Schaltung) können damit mit gleichen Fertigungseinrichtungen hergestellt werden. Damit kann die Variantenvielfalt einzelner Komponenten reduziert werden, und damit die Kosten aufgrund einer größeren Stückzahlbasis reduziert werden. Somit können z. B. Lastschaltgetriebe und Handschaltgetriebe, die auch automatisiert sein können, auf Basis nur eines Getriebes hergestellt werden. Weiterhin können mit einer erfindungsgemäßen Schaltvorrichtung Gruppengetriebe handschaltbar gestaltet werden, ohne weitere Schalthebel zum Einlegen der verschiedenen Gruppenstufen oder fremdkraftbeaufschlagte Aktoren welche die Gruppenstufen bei einer Wählbewegung des Schalthebels ändern, zu benötigen.

Bevorzugte Ausführungsbeispiele sind in den Figuren schematisch dargestellt.
Es zeigt:
- Fig. 1: eine schematische Darstellung von Motor-Getriebe und Schalthebel nach dem Stand der Technik;
- Fig. 2a: einen exemplarischen Antriebsstrang eines lastschaltbaren Doppelkupplungsgetriebes nach dem Stand der Technik;
- Fig. 2b: einen exemplarischen Antriebsstrang eines handschaltbaren Doppelkupplungsradsatzes nach der Erfindung;
- Fig. 3: eine erfindungsgemäße Konvertierungsvorrichtung mit Schaltbild, zusammen mit Schaltwellen und den zugehörigen Schaltfingerwellen;
- Fig. 4: als Einzelheit eine besondere Ausgestaltung von Schaltfingern, im Eingriff mit einer Schaltstange;
- Fig. 5a: eine prinzipielle Darstellung der Funktionsweise der Konvertierungsvorrichtung;
- Fig. 5b: eine weitere prinzipielle Darstellung der Funktionsweise der Konvertierungsvorrichtung;
- Fig. 6a bis 6d: die Konvertierungsvorrichtung nach Fig. 3 in schematischer Darstellung für verschiedene Schaltstellungen;
- Fig. 7: eine weitere Ausführungsform eines Handschalters zusammen mit entsprechenden Schaltfinger, wobei die Darstellungen in den Fig. 7 bis 11 nicht der Erfindung entsprechen;
- Fig. 8: als Einzelheit einen Schaltfinger, zwei verschiedene Schaltstangen sowie Schaltauslegeelemente;
- Fig. 9: in schematischer Form eine Darstellung gemäß Fig. 6 mit entsprechenden Schaltstangen und Schaltfingern;
- Fig. 10 und 11: in Draufsicht eine Darstellung gemäß Fig. 9;
- Fig. 12: eine alternative Ausbildung der erfindungsgemäßen Konvertierungsvorrichtung mit einer Schaltfingerwelle und zugehörigen Schaltstangen in perspektivischer Darstellung und
- Fig. 13 bis 15: die Konvertierungsvorrichtung nach Fig. 12 in unterschiedlichen Seitenansichten.

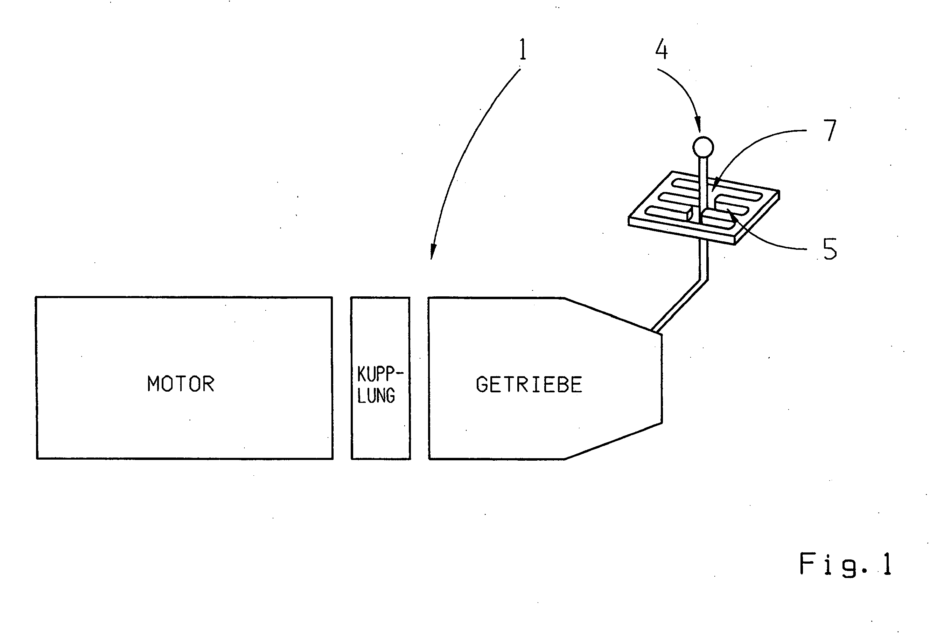

In Fig. 1 ist in schematischer Darstellung ein Motor eines Kraftfahrzeuges dargestellt, an den sich in axialer Richtung eine Kupplung sowie ein Getriebe 1 anschließt, wie aus dem Stand der Technik bekannt. Das Getriebe 1 wird über einen Schalthebel 4 betätigt, wobei dieser Schalthebel 4 in dieser Ausführungsform in Schaltgassen 5 und in einer Wählgasse 7 geführt ist. Der Schalthebel 4 ist in dieser Ausführungsform mit einem Schaltbild in H-Form dargestellt, es lassen sich jedoch auch Schaltbilder in Mehrfach-H-Form vorsehen. Dies ist abhängig von der Anzahl der Übersetzungsstufen des zugehörigen Kraftfahrzeuggetriebes 1.

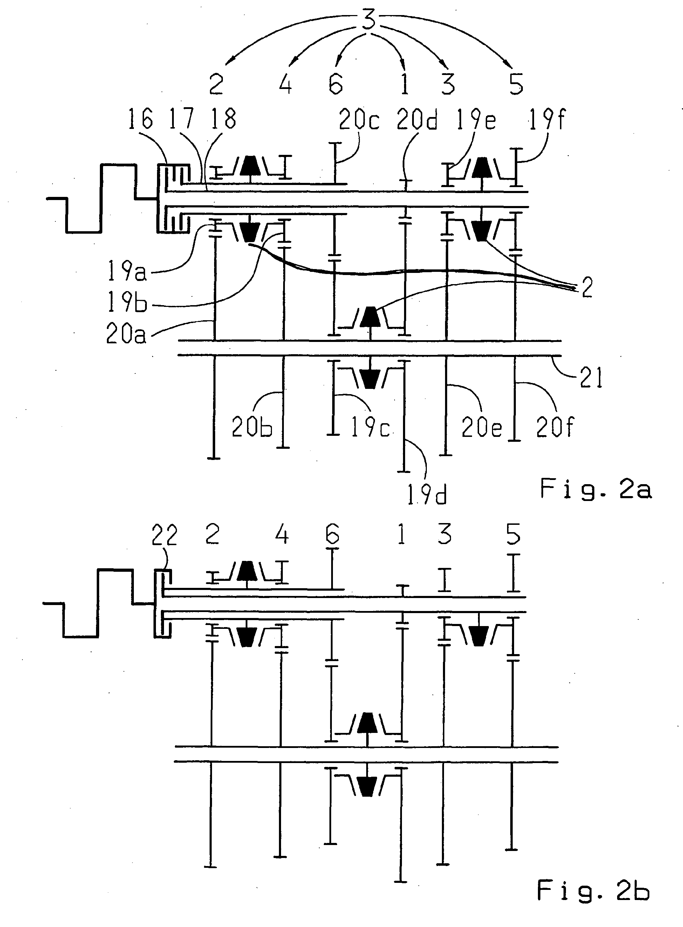

Fig. 2a zeigt in symbolhafter Darstellung den Aufbau eines Doppelkupplungsgetriebes nach dem Stand der Technik und dessen Einbau in den Antriebsstrang eines Lastschaltsystems. Um Lastschaltungen ohne Zugkraftunterbrechung zu realisieren ist dem Doppelkupplungsgetriebe eine Doppelkupplung 16 zugeordnet. Dazu ist jeweils einer Kupplung der Doppelkupplung 16 eine Eingangswelle des Doppelkupplungsgetriebes zugeordnet. Hierbei liegen die geraden (2, 4, 6) und die ungeraden (1, 3, 5,) Gänge jeweils auf einer Getriebeeingangswelle. Die Übersetzugnsstufen der geraden Gänge liegen auf der Hohlwelle 17 und die ungeraden Gänge liegen auf der Vollwelle 18, welche von der Hohlwelle 17 umschlossen wird. Die Übersetzungsstufen des zweiten und vierten Ganges werden von auf der Hohlwelle gelagerten Losrädern 19a und 19b und von mit der Vorgelegewelle 21 fest verbundenen Festrädern 20a, 20b gebildet. Die Übersetzungsstufe des sechsten Ganges wird von dem Festrad 20c, welches auf der Hohlwelle 17 sitzt, und dem Losrad 19c auf der Vorgelegewelle 21 gebildet.. Die Übersetzungsstufe des ersten Ganges wird von dem Festrad 20d, welches auf der Vollwelle 18 sitzt, und dem Losrad 19d gebildet. Die Übersetzungsstufen der dritten und fünften Gangstufe werden von den Losrädern 19e, 19f, welche auf der Vollwelle 18 sitzten, und den beiden Festrädern 20e, 20f der Vorgelegwelle 21 gebildet. Eine Übersetzungsstufe des Rückwärtsganges oder weiterer Vorwärtsgänge sind nicht dargestellt. Den Losrädern 19a, 19b der zweiten und vierten Gangstufe ist ein gemeinsames Schaltpaket 2 zugeordnet, welches die beiden Losräder 19a, 19b mit der Hohlwelle 17 drehfest verbinden kann. Der ersten und sechsten Gangstufe ist ebenfalls ein gemeinsames Schaltpaket 2 zugeordnet. Dieses Schaltpaket sitzt auf der Vorgelegewelle 21, ist axial verschiebbar und kann die Losräder 19c, 19d mit der Vorgelegewelle 21 drehfest verbinden. Den Gangstufen 3 und 5 ist ebenfalls ein gemeinsames, axial verschiebbares Schaltpaket 2 zugeordnet, welches die Losräder 19e, 19f drehfest mit der Vollwelle 18 verbinden kann. Um Lastschaltungen ohne Zugkraftunterbrechung durchführen zu können, wird die Gangstufe des Zielganges bei ihr zugordneter, geöffneter Kupplung bereits vor dem eigentlichen Schaltvorgang eingelegt. Während des Schaltvorganges erfolgt dann eine Überschneidungsschaltung der beiden Kupplungen der Doppelkupplung 16. Hierbei wird die Kupplung des Zielganges geschlossen, während gleichzeitig die Kupplung des alten Ganges synchron geöffnet wrid. Dabei erfolgt die Momentenübergabe des an der Doppelkupplung 16 angliegenden Motormomentes von der alten Kupplung auf die neue Kupplung. Sowohl die Ansteuerung der Doppelkupplung 16 als auch des Doppelkupplungsgetriebes erfolgt automatisiert. Hierbei ist der Doppelkupplung ein automatisierter Kupplungsaktuator zugeordnet und dem Doppelkupplungsgetriebe ein Getriebeaktuator, welcher die Schaltpakete 2 automatisiert betätigt. Die Ansteuerung sowohl der Kupplungsaktuatorik als auch der Getriebeaktuatorik erfolgt durch eine nicht dargestellte Steuereinheit, welche Eingangssignale, wie z. B. eine Schaltanforderung aufnehmen kann, und den Betrieb der Getriebeaktuatorik und der Kupplungsaktuatorik aufeinander abstimmt und vornimmt.

In Fig. 2b ist das gleiche Doppelkupplungsgetriebe in einem handgeschalteten Antriebsstrang dargestellt. Hierbei ist zwischen dem Motor und dem Getriebe eine vom Fahrer betätigbare Kupplung 22 angeordnet. Die beiden Getriebeeingangswellen des Doppelkupplungsgetriebes sind beide mit der Kupplungsscheibe der Kupplung 22 verbunden. Eine drehfeste Verbindung der beiden Getriebeeingangswellen kann sowohl innerhalb der Kupplung als auch innerhalb des Doppelkupplungsgetriebes stattfinden. Auch ist dem Fachmann natürlich klar, dass anstelle zweier Getriebeeingangswellen nur eineGetriebeeingangswelle verwendet werden kann, ohne die Radsätze des ursprünglichen Doppelkupplungsgetriebes verändern zu müssen. Bei Verwendung der erfindungsgemäßen Schaltvorrichtung ist es nunmehr möglich, die grundsätzliche Anordnung von Übersetzungsstufen des Doppelkupplungsgetriebes beizubehalten und dennoch in gewohnter Weise in einem Schaltbild zu schalten, in welchem sich benachbarte Gänge im wesentlichen gegenüberliegen. Die Verwendung einer herkömmlichen Schaltvorrichtung würde ein Schaltbild bedingen, welches dem Fahrer unnatürlich erscheint. Hierbei würden sich die Gänge 2 und 4 in einer Gasse befinden, als auch in einer weiteren Gasse die Gänge 1 und 6, als auch in einer weiteren Gasse die Gänge 3 und 5 sich gegenüberliegen.

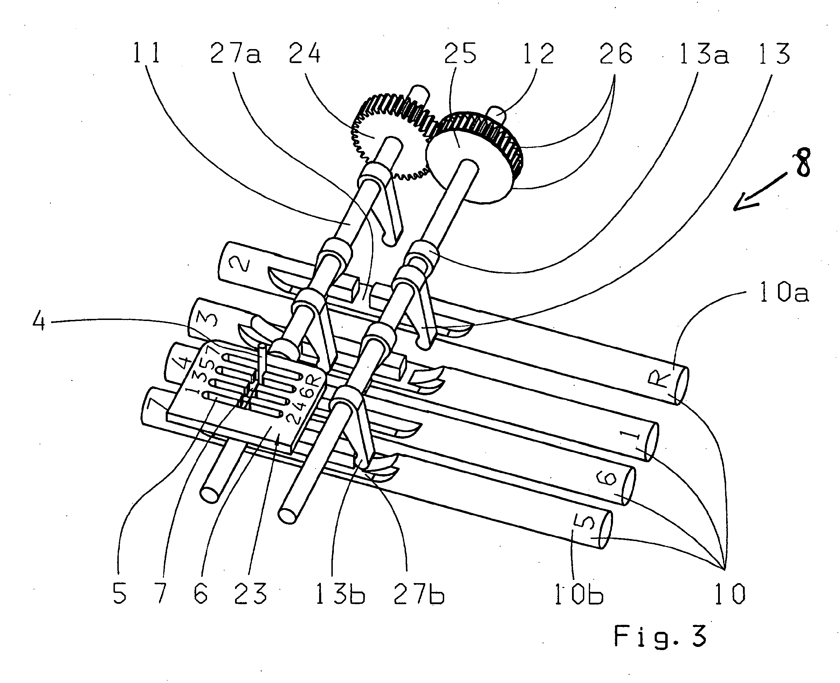

Fig. 3 zeigt eine erfindungsgemäße Konvertierungsvorrichtung 8, jedoch mit einer zu der in Fig. 2b gezeigten Vorrichtung unterschiedlichen Schaltabfolge. Hierbei ist der Schalthebel 4 in einer Schaltkulisse 23 geführt. Das Schaltbild 6 der Schaltkulisse 23 besteht aus vier Schaltgassen 5, welche durch eine Wählgasse 7 verbunden sind. Der Schalthebel 4 ist mit der Schaltfingerwelle 11 fest verbunden. Parallel zur Schaltfingerwelle 11 liegt die Schaltfingerwelle 12. Die Schaltfingerwelle 11, 12 sind mittels der Zahnräder 24 und 25 miteinander gekoppelt. Hierbei ist das Zahnrad 24 fest mit der Schaltfingerwelle 11 verbunden. Das Zahnrad 25 ist fest mit der Schaltfingerwelle 12 verbunden. Durch die Kopplung der beiden Schaltfingerwellen 11, 12 mittels den Zahnrädern 24, 25 erfolgt bei Bewegung des Schalthebels 4 in einer Schaltgasse 5 eine gegenläufige Drehbewegung der beiden Schaltfingerwellen. Eine Bewegung des Schalthebels 4 in der Wählgasse 7 bedingt ein paralleles Verschieben der beiden Schaltfingerwellen 11, 12. Hierzu ist das Zahnrad 25 dergestalt ausgebildet, dass es an seinen beiden Stirnseiten scheibenartige Führungselemente 26 besitzt, welche einen größeren Radius als das Zahnrad 25 haben. Damit wird das Zahnrad 24 der Schaltfinngerwelle 11 axial geführt. Auf jeder der beiden Schaltfingerwellen 11, 12 sitzen jeweils vier Schaltfinger 13, welche starr mit der jeweiligen Schaltfingerwelle 11, 12 verbunden sind. Ein Anwählen einer gewünschten Schaltgasse 5 mittels des Schalthebels 4 bringt die entsprechenden Schaltfinger 13 mit der zu schaltenden Schaltstange 10 in Wirkverbindung. In der hier gezeigten Schaltstellung ist die Gasse des siebten und des Rückwärtsganges angewählt. In dieser Schaltstellung ist der Schaltfinger 13a im Eingriff mit der Schaltstange 10a und der Schaltfinger 13b ist im Eingriff mit der Schaltstange 10b. Ein Verschieben des Schalthebels 4 in Richtung der Schaltposition des siebten Ganges bedingt eine gegenläufige Verdrehung der beiden Schaltfingerwellen 11, 12. Die Verdrehung der Schaltfingerwelle 12 bedingt ein Verschwenken der beiden Schaltfinger 13a und 13b zur Schaltfingerwelle 11 hin. Hierbei schwenkt der Schaltfinger 13a aus der Schaltnut 27a der Schaltstange 10a nach oben heraus. Der Schaltfinger 13b, welcher in der Schaltnut 27b der Schaltstange 10b im Eingriff ist, wird bei Verschieben des Schalthebels 4 in Richtung der Schaltposition des siebten Ganges senkrecht unter die Schaltfingerwelle 12 gedreht. Dabei wird die Schaltstange 10b in die gleiche Richtung verschoben wie der Schalthebel 4 und der siebte Gang wird mittels eines nicht dargestellten Schaltpaketes, welches mit der Schaltstange 10b verbunden ist, eingelegt. Ein Zurückdrehen des Schalthebels 4 in die Neutralgasse bzw. Wählgasse 7 bedingt ein Zurückziehen der Schaltstange 10b mittels des im Eingriff befindenden Schaltfingers 13b. Weiteres Verschieben des Schalthebels 4 in Richtung der Schaltposition des Rückwärtsganges R bedingt ein Verschwenken des Schaltfingers 13b aus der Schaltnut 27b der Schaltstange 10b nach oben heraus. Dabei wird die Schaltstange 10b nicht weiter als in die Neutralstellung verschoben. Der Schaltfinger 13a wird bei Verschieben des Schalthebels 4 in Richtuntg der Schaltposition des Rückwärtsganges wieder in die Schaltnut 27a der Schaltstange 10a hineingeschwenkt, kommt mit seiner Flanke in Anlage an eine Seitenfläche der Schaltnut 27a und verschiebt bei weiterem Verdrehen des Schalthebels 4 die Schaltstange 10a zum Einlegen des Rückwärtsganges. Die Schaltstange 10a wird hierbei in dieselbe Richtung wie die Bewegungsrichtung des Schalthebels 4 beim Schalten des Rückwärtsganges verschoben.

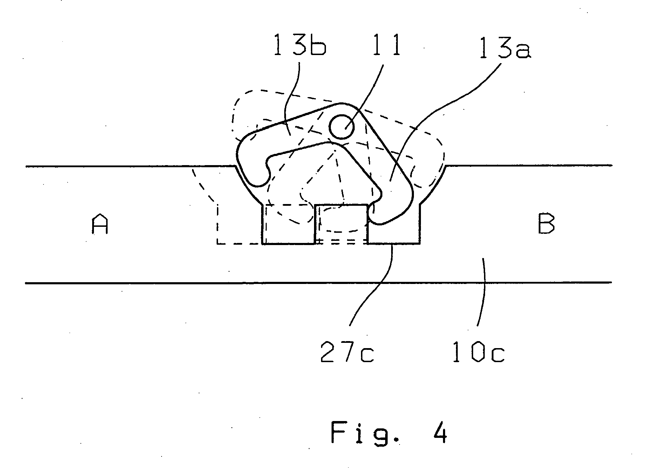

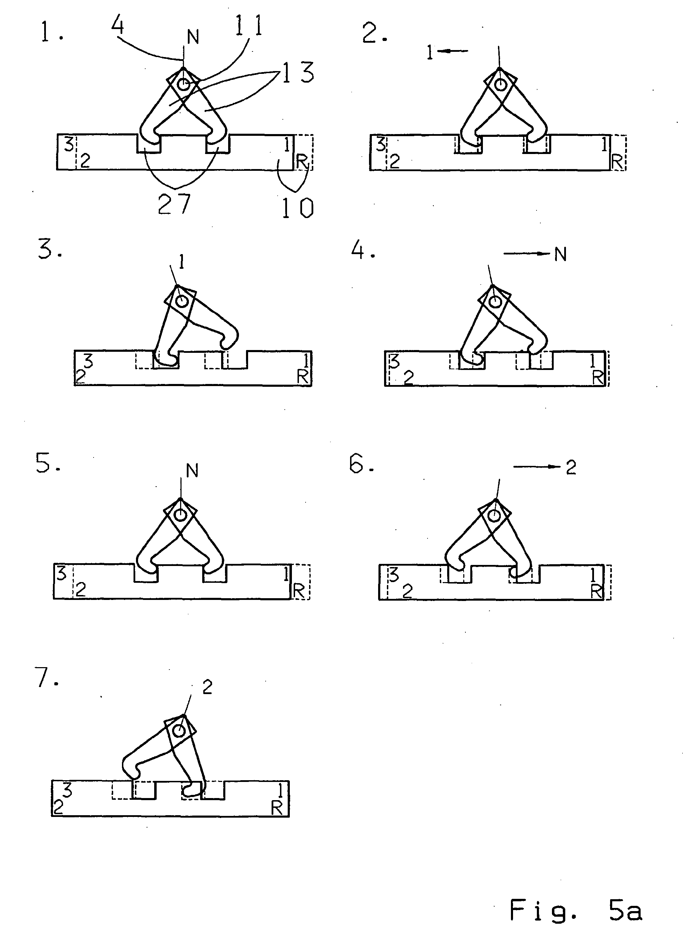

Fig. 4 zeigt eine alternative Ausgestaltung eines Schaltfingers 13. Der Schaltfinger 13 ist hierbei symmetrisch aufgebaut, besteht aus den beiden Schenkeln 13a und 13b, sitzt auf der Schaltfingerwelle 11 und greift in die Schaltnut 27c der Schaltstange 10c ein. Beim Drehen der Schaltfingerwelle 11 im Uhrzeigersinn legt der Schenkel 13a des Schaltfingers 13 den Gang A der Schaltstange 10c ein. Gleichzeitig wird der Schenkel 13b aus der symmetrisch aufgebauten Schaltnut 27c herausgeschwenkt. Zum Auslegen des Ganges A wird die Schaltfingerwelle 11 entgegen dem Uhrzeigersinn zurückgedreht, wobei der Schaltfingerschenikel 13a die Schaltstange 10c zurückschiebt. Wird zum Einlegen eines weiteren Ganges die Schaltfingerwelle 11 weiter entgegen des Uhrzeigersinnes gedreht, schwenkt der Schaltfingerschenkel 13a aus der Schaltnut 27c heraus. Geschieht das Auslegen des Ganges A und das Einlegen eines neuen, hier nicht dargestellten weiteren Ganges schwungvoll, kann es aufgrund der Trägheit der Schaltstange 10 dazu führen, dass diese in Richtung Einlegen des Ganges B weiterrutscht. Um dies zu verhindern, schwenkt der Schaltfingerschenkel 13b beim Einlegen eines weiteren Ganges, welcher im Schaltbild gegenüber der Schaltposition des Ganges A liegt, in die Schaltnut 27c ein, ohne dabei jedoch die Schaltstange 10c zu verschieben. Damit ist ein versentliches Einlegen des Ganges B verhindert, da die Schaltstange 10c beim Anliegen am Schaltfingerschenkel 13d zum Stoppen kommt.

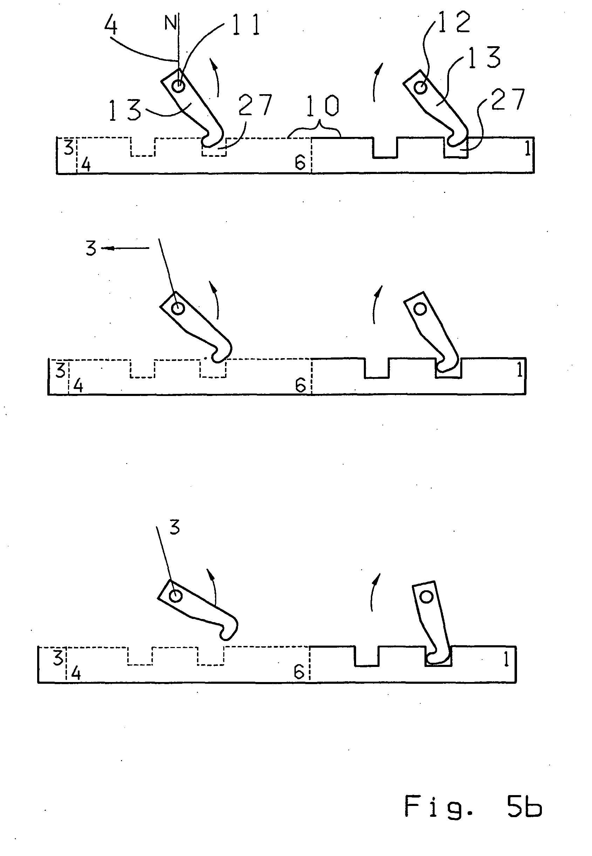

Fig. 5a und 5b zeigen eine prinzipelle Darstellung der Funktionsweise der Konvertierungsvorrichtung 8. In Fig. 5a befindet sich der Schalthebel 4 in der Gasse des ersten und zweiten Ganges. Hierbei befinden sich die beiden Schaltfinger 13 auf der gleichen Schaltfingerwelle 11. Der linke Schaltfinger der beiden Schaltfinger 13 greift in die Schaltstange des ersten und dritten Ganges ein, welche hier durchgezeichnet dargestellt ist. Der rechte der beiden Schaltfinger greift in die gestrichelt dargestellte Schaltstange des zweiten Ganges und Rückwärtsganges ein. Die beiden Schaltstangen und die zugehörigen Schaltfinger 13 sind, wie aus Abbildung 3 ersichtlich, in verschiedenen Ebenen angebracht, in den Fig. 5a und 5b jedoch in eine Betrachtungsebene projeziert. In der ersten Zeichnung der Fig. 5a befindet sich der Schalthebel 4 in Neutralstellung. Die Schaltfingerwelle 11 ist derart platziert, dass sie nicht senkrecht über den Schaltnuten 27 steht. In der zweiten Zeichnung der Fig. 5a wird zum Einlegen des ersten Ganges der Schalthebel 4 nach links bewegt. Hierbei schiebt der linke Schaltfinger die Schaltstange des ersten und dritten Ganges nach rechts. In der dritten Zeichnung der Fig. 5a ist der erste Gang eingelegt, die Schaltstange des ersten und dritten Ganges ist einer geschalteten Stellung entsprechend nach rechts verschoben und der rechte Schaltfinger hat sich aus der Schaltnut der Schaltstange des zweiten Ganges und Rückwärtsganges komplett herausgehoben, ohne diese Schaltstange während des Einlegens des ersten Ganges verschoben zu haben. In der vierten Zeichnung der Fig. 5a wird der erste Gang wieder ausgelegt, dazu wird der Schalthebel 4 zurück in die senkrechte Stellung nach rechts verschoben. Hierbei taucht der rechte Schaltfinger wieder in die Schaltnut der Schaltstange des zweiten Ganges und Rückwärtsganges ein, während der linke Schaltfinger die Schaltstange des ersten Ganges zurückschiebt. Die fünfte Zeichnung entspricht der ersten Zeichnung, in der beide Gänge ausgelegt sind. Zum Einlegen des zweiten Ganges in der Zeichnung 6 wird der Schalthebel nach rechts verschoben. Hierbei hebt sich der linke Schaltfinger aus seiner Schaltnut der Schaltstange des ersten und dritten Ganges heraus. Der rechte Schaltfinger verschiebt die gestrichelt dargestallte Schaltstange des zweiten Ganges und Rückwärtsganges nach links. In der siebten Zeichnung ist der zweite Gang eingelegt, der linke Schaltfinger hat sich komplett aus der Schaltnut des ersten und dritten Ganges herausgehoben, und der rechte Schaltfinger hat sich im wesentlichen senkrecht unter die Schaltfingerwelle 11 gedreht, und dabei die Schaltstange des zweiten Ganges und Rückwärtsganges nach links geschoben.

Aus der Fig. 5a ist deutlich zu ersehen, dass die Anordnung der Schaltfinger auf der Schaltfingerwelle, auf welcher der Schalthebel direkt angebracht ist, eine gegenläufige Verschieberichtung der Schaltstangen in Bezug zur Betätigungsrichtung des Schalthebels bedingt.

In Fig. 5b ist die Funktionsweise der Konvertierungsvorricthung 8 bei einer Position des Schalthebels 4 in einer Schaltgasse, in welcher die im Eingriff befindlichen Schaltfinger 13 auf verschiedenen Schaltfingerwellen 11, 12 angebracht sind, dargestellt. Eine Kopplung der beiden Schaltfingerwelle 11, 12 ist nicht dargestellt, ist aber aus Fig. 3 ersichtlich. Der linke Schaltfinger 13, welcher der Schaltfingerwelle 11 zugeordnet ist, ist im Eingriff mit der Schaltstange des vierten und sechsten Ganges, welcher hier gestrichelt dargestellt ist. Der rechte Schaltfinger 13, welcher der gegenläufigen Schaltfingerwelle 12 zugeordnet ist, ist der Schaltfingerwelle des ersten und dritten Ganges zugeordnet. Auch hier befinden sich die beiden Schaltstangen mit den zugehörigen, in Eingriff befindlichen Schaltfingerwellen in verschiedenen Ebenen, sind aber in der Zeichnung in eine Ebene projeziert. In der obersten Zeichnung befindet sich der Schalthebel 4 in einer Neutralstellung, und die beiden Gänge, der dritte und vierte Gang sind ausgelegt. Zum Einlegen des dritten Ganges wird der Schalthebel entsprechend seines Schaltbildes in Richtung der Schaltposition des dritten Ganges verschoben. Der Schalthebel 4 wird entsprechend der mittleren Zeichnung nach links gedrückt. Hierbei hebt sich der Schaltfinger 13, welcher der Schaltfingerwelle 1 des Schalthebels 4 zugeordnet ist, aus seiner Schaltnut 27des vierten und sechsten Ganges heraus. Der Schaltfinger 13, welcher auf der Schaltfingerwelle 12 angebracht ist, wird durch die gegensinnige Drehrichtung der Schaltfingerwelle 12 im Uhrzeigersinn verdreht. Hierbei schiebt der Schaltfinger 13 die durchgezogen dargestellte Schaltstange des ersten und dritten Ganges nach links. In der untersten Zeichnung der Fig. 5b ist die eingelegte Schaltstellung des dritten Ganges dargestellt. Der linke Schaltfinger des vierten und sechsten Ganges ist komplett aus der Schaltnut der Schaltstange des vierten und sechsten Ganges herausgeschwenkt. Der Schaltfinger des dritten Ganges, welcher auf der Schaltfingerwelle 12 sitzt, ist im wesentlichen senkrecht unter die Schaltfingerwelle 12 gedreht. Aus den Fig. 5a und 5b ist deutlich ersichtlich, dass ein wesentliches Konstruktionsmerkmal der erfindungsgemäßen Konvertierungsvorrichtung die dezentrale Anordnung der beiden Schaltfingerwellen 11 und 12 über den Schaltnuten 27 der einzelnen Schaltstangen ist. Damit wird gewährleistet, dass ein Herausschwenken eines Schaltfingers 13 aus seiner Schaltnut 27 ohne Verschieben der zugehörigen Schaltstange erfolgt. Zum Einlegen eines Ganges ist erfindungsgemäß vorgesehen, den jeweiligen Schaltfinger 13, gleich weicher Schaltfingerwelle 11, 12 er zugeordnet ist, so auf der Schaltfingerwelle anzuordnen, dass er bei Betätigung des Schalthebels 4, senkrecht zur Schaltstange, unter seine Schaltfingerwelle gedreht wird.

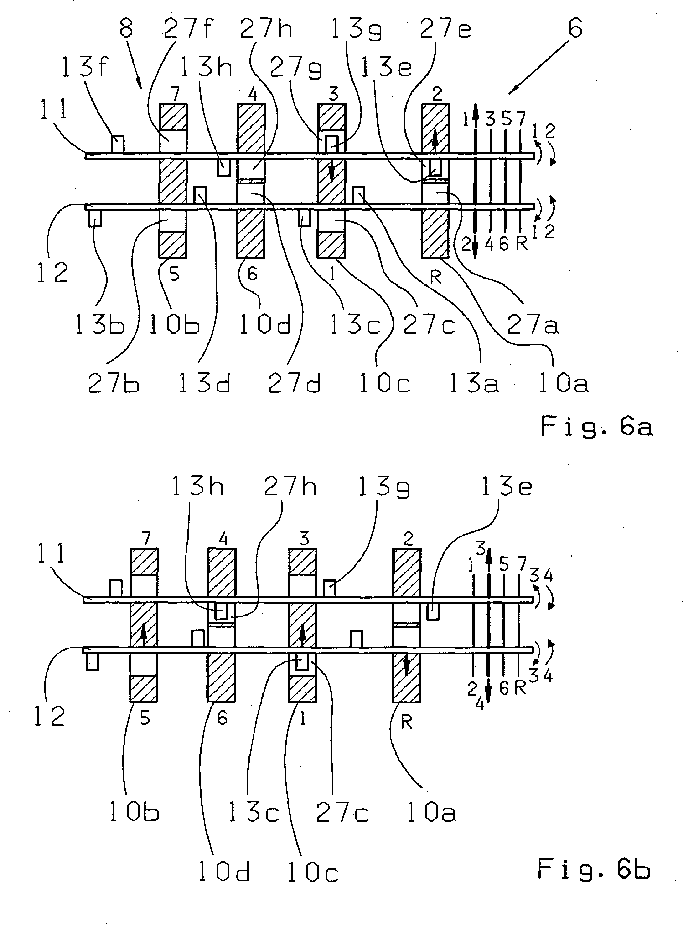

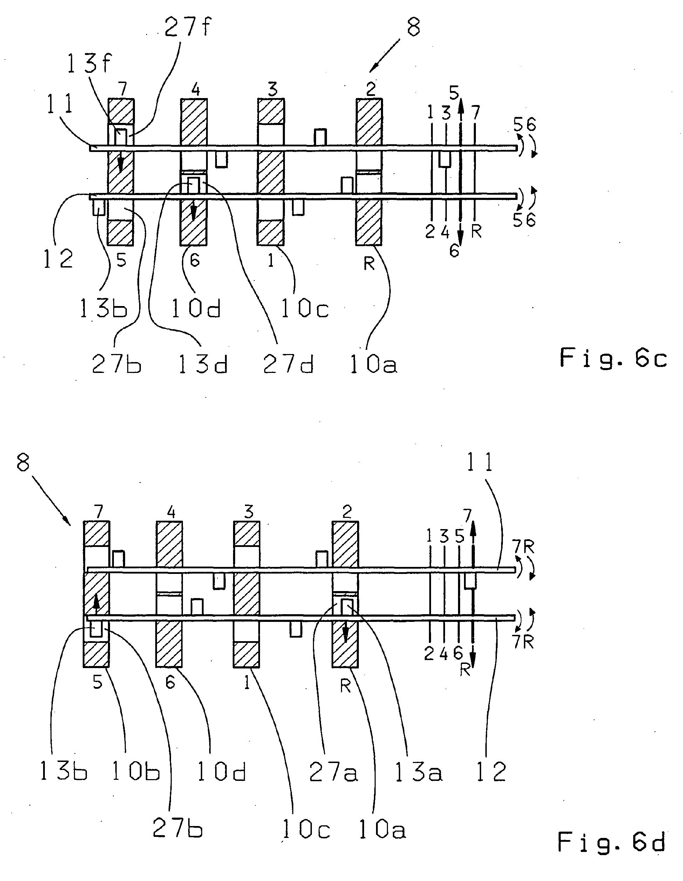

In den Figuren 6a bis 6d ist die Konvertierungsvorrichtung 8 in verschiedenen Schaltstellungen für die Schaltgasse 1-2 (Fig. 6a), für die Schaltgasse 3-4 (Fig. 6b), für die Schaltgasse 5-6 (Fig. 6c) sowie für die Schaltgasse 7-R (Fig. 6d) gezeigt. Die Darstellung entspricht schematisch im wesentlichen der Ausbildung nach Fig. 3, wobei der Einfachheit halber das Schaltbild 6 aus einer oberhalb der Schaltfingerwellen 11, 12 vorgesehenen Ebene in Fig. 3 in die Ebene der Schaltfingerwellen 11, 12 projiziert ist. Die Schaltstangen 10 a, 10 b, 10 c und 10 d sind achsparallel zueinander und axial verschieblich in einem nicht dargestellten Getriebegehäuse gelagert, wobei in Neutralstellung des Schalthebels die Enden der Stangen 10a bis 10d in einer Ebene liegen. Die auf den Schaltstangen 10a bis 10d angegebenen Ziffern 1 bis 7 und R markieren die Gangstufen. Zum Einlegen eines Ganges, bzw. zur Betätigung eines Schaltpaketes wird jeweils eine Schaltstange axial derart verschoben, sodass das mit der der Gangstufe entsprechenden Ziffer versehene Ende der Schaltstange nach dem Schaltvorgang die Enden der übrigen nicht geschaltenen Schaltstangen überragt.

Wie oben bereits teilweise erläutert, besteht die Konvertierungsvorrichtung 8 (Fig. 6a) im wesentlichen aus den Schaltstangen 10a bis 10d, welche mit Schaltnuten 27a bis 27h zur Aufnahme der Schaltfinger 13a bis 13h versehen sind. Jeweils vier Schaltfinger 13a, 13,b, 13c, 13d sind drehfest mit der Schaltfingerwelle 12 und vier Schaltfinger 13e, 13f, 13g, 13h sind drehfest mit der Schaltfingerwelle 11 verbunden. Die Schaltfingerwellen 11 und 12 sind im wesentlichen achsparallel zueinander und senkrecht zu den Schaltstangen 10a bis 10d in einer Ebene "oberhalb" der Schaltstangen 10a bis 10d angeordnet. Die Schaltfingerwelen 11 und 12 sind mittels des in Fig. 3 gezeigten Schalthebels 4 sowohl axial verschieblich als auch um ihre eigene Achse drehbar gelagert. Durch die ebenfalls in Fig.3 gezeigte Kopplung der beiden Schaltfingerwellen 11, 12 mittels der Zahnräder 24 und 25 werden entweder beide Wellen 11, 12 axial gleichsinnig verschoben oder gegensinnig zueinander verdreht. Die Zahlenangaben 1,2 am rechten Bildrand neben den Drehrichtungspfeilen geben die der jeweiligen Gangstufe 1, bzw. 2 entsprechende Drehrichtung der Schaltfingerwellen 11, 12 an.

Durch die abgestimmte Anordung der Schaltfinger 13a bis 13h auf den Schaltfingerwellen 11, 12 werden je nach gewünschter Gangstufe, bzw. gewählter Schaltgasse, bspw. Schaltgasse 1-2 (Fig.6a) zwei Schaltfinger 13e und 13g der Schaltfingerwelle 11 mit den korrespondierenden Schaltnuten 27e und 27g der Schaltstangen 10a, 10c in Eingriff gebracht. Beim Verschwenken des Schalthebels in der Schaltgasse 1-2 nach vom (siehe auch Schaltbild 6 in Fig. 3), also in Richtung des ersten Gangs, schwenkt der Schaltfinger 13g "unter" die Schaltfingerwelle 11 und kommt mit seiner Flanke in Anlage an eine Stirnfläche der Schaltnut 27g und verschiebt beim weiteren Schwenken die Schaltstange 10c in Pfeilrichtung (in Bildebene nach unten), sodass nach Beendigung des Schaltvorgangs die Schaltstange 10c mit ihrem in Bildebene "unteren" Ende die Enden der übrigen Schattstangen 10a, 10b und 10d überragt; diese Endposition ist der Übersichtlichkeit halber nicht dargestellt. Gleichzeitig während des Einlegens des ersten Gangs schwenkt der Schaltfinger 13e des zweiten Gangs aus der Schaltnut 27e heraus. Die Schaltnuten 27a bis 27h sind derart ausgebildet, dass sie in axialer Richtung jeweils eine im wesentlichen "scharfkantige" Stirnfäche zur Anlage eines Schaltfingers und an ihrer gegenüberliegenden Stirnfäche eine im wesentlichen schräge, bzw. bogenförmige Ausnehmung aufweisen, welche ein Ausschwenken des korrespondierenden Schaltfingers aus der Nut ermöglicht, ohne dass dieser eine Bewegung der Schaltstange erzeugt.

Zum Schalten des zweiten Gangs (Fig. 6a) wird der Schalthebel im Schaltbild 6 in Richtung 2 geschwenkt. Dabei zieht einerseits der zurückschwenkende Schaltfinger 13g die Schaltstange 10c wieder in ihre Neutralposition zurück, während andererseits nun der Schaltfinger 13e in die Schaltnut 27e eingreift und an der "scharfkantigen" Stirnfläche der Nut 27e zum Anliegen kommt und anschliessend die Schaltstange 10a in Pfeilrichtung des zweiten Gangs (in Bildebene nach oben) mitnimmt. Bei eingelegtem zweiten Gang überragt das "obere" Ende der Schaltstange 10a (mit Ziffer 2 gekennzeichnet die Enden der übrigen Schaltstangen 10b, 10c, 10d; diese Position ist der Übersichtlichkeit halber nicht dargestellt. Beim Zurückschwenken des Schalthebels aus der Schaltposition 2 nach Neutral erfolgen die vorbeschriebenen Bewegungen in umgekehrter Reihenfolge. Die übrigen Schaltfinger ausser den beiden an der Schaltung 1-2 beteiligten Schaltfingern 13e, 13g kommen während der Schaltung 1-2 nicht zum Eingriff; dies gilt analog auch für die anderen nachfolgend noch beschriebenen Schaltungen. In der Schaltgasse 1-2 befinden sich ausserdem die Schaltfingerwellen 11, 12 in ihrer in Bildebene linken Anschlagposition. Weiterhin sind während der Schaltung 1-2 nur zwei Schaltfinger 13e, 13g beteiligt, welche an einer gemeinsamen Schaltfingerwelle 11 befestigt sind. Eine "gegensinnige" Bewegung der zweiten Schaltfingerwelle 12 ist daher bei den Schaltungen 1-2 nicht erforderlich.

Bei einem Wechsel der Schaltgasse von 1-2 nach 3-4 (Fig. 6b) werden zunächst die Schaltfingerwellen 11, 12 gleichmässig in Bildebene nach rechts verschoben, sodass die Schaltfinger 13e, 13g des ersten und zweiten Gangs aus den Schaltnuten 27e, 27g ausschwenken und die Schaltstangen 10a, 10,c freigeben. Sobald die Schaltgasse 3-4 eingestellt ist, sind die Schaltfinger 13c, 13h in die Schaltnuten 27c, 27h eingelegt, wobei der Schaltfinger 13c auf der Schaltfingerwelle 12 und der Schaltfinger 13h auf der Schaltfingerwelle 11 angeordnet ist. Beim Schwenken des Schalthebels in Position dritter Gang wird die Schaltfingerwelle 12 gegensinnig zur Schaltfingerwelle 11 und gleichsinnig zur Bewegungsrichtung des Schalthebels gedreht. Dabei erzeugt der Schaltfinger 13c eine axiale Verschiebung der Schaltstange 10c in Richtung dritter Gang, d. h. in Bildebene nach "oben". Bei eingelegtem dritten Gang ragt das mit "3" gekennzeichnete Ende der Schaltstange 10c über die Enden der übrigen Schaltstangen hinaus. Bei einem Wechsel vom dritten in den vierten Gang nimmt zunächst der Schaltfinger 13c die Schaltstange 10c wieder zurück bis in Neutralposition und schwenkt dann aus der Schaltnut 27c aus, sodass anschliessend der Schaltfinger 13h auf der anderen Schaltfingerwelle 11 in die Schaltnut 27h einschwenken und danach die Schaltstange 10d in Richtung vierter Gang verschiebt. Dabei führen im Unterschied zu der Schaltung 1-2 die beiden beaufschlagten Schaltfinger 13c, 13h eine Schwenkbewegung in der selben Richtung aus und nehmen auch die Schaltstangen 10c, 10d in die selbe Richtung mit.

Analog zu den beiden vorbeschriebenen Schaltungen 1-2 und 3-4 erfolgen auch die Schaltungen 5-6 (Fig. 6c) sowie 7-R (Fig. 6d), wobei die Schaltfingerwellen 11, 12 axial jeweils der Schaltgassen-Position entsprechend verschoben werden und somit unterschiedliche Schaltstangen, bzw. mit den Schaltstangen verbundene nicht gezeigte Schaltpakete betätigen. Bei den Schaltungen 5-6 kommen zwei auf unterschiedlichen Schaltfingerwellen 11, 12 angeordnete Schaltfinger 13f, 13d zum Eingriff, welche die korrespondierenden Schaltstangen 10b, 10d in die gleiche Richtung verschieben.

Bei den Schaltungen 7-R (Fig. 6d) werden die beiden Schaltfinger 13b, 13a aktiviert, welche gemeinsam auf einer Schaltfingerwelle 12 angeordnet sind und die korrespondierenden Schaltstangen 10b, 10a in unterschiedliche Richtungen verschieben.

Selbstverständlich wird ausser der vorbeschriebenen Konvertierungsvorrichtung mit axial verschieblichen Schaltstangen auch eine Ausbildung vorgeschlagen, welche eine oder mehrere feststehende "Schaltstange/n" vorsieht, auf der/denen axial verschiebliche Schiebemuffen mit fest verbundenen Schaltgabeln angeordnet sind. Alternativ zu der ebenfalls ausführlich beschriebenen Ausbildung Schaltfinger und Schaltstange mit Schaltnut ist auch eine Ausbildung eines auf einer Schaltwelle schwenkbar gelagerten Zahnradsegments vorgesehen, welches mit den Zähnen einer korrespondierenden Zahnstange anstelle einer Schaltstange zusammen wirkt.

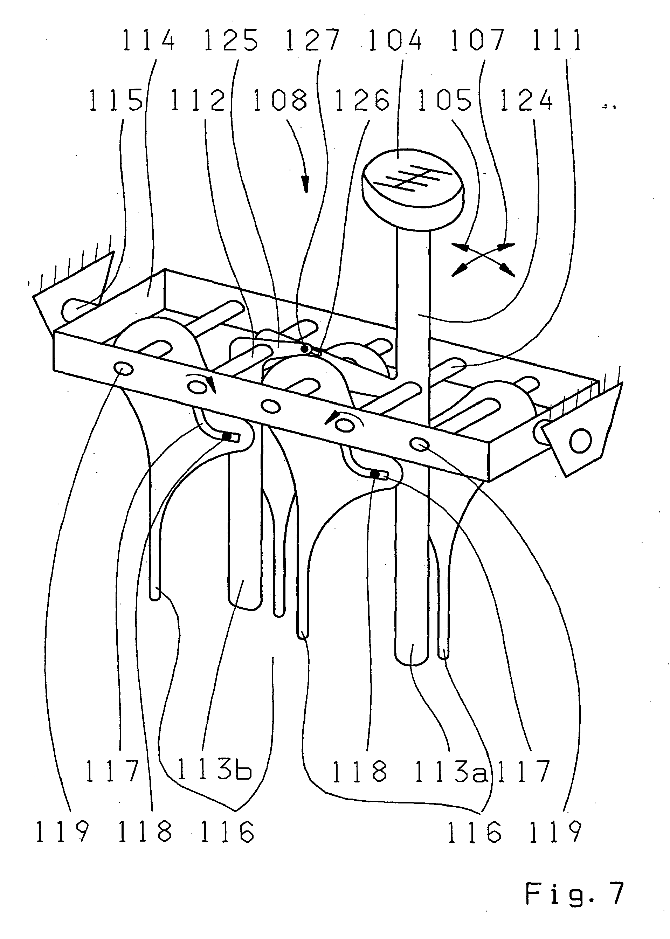

In Fig. 7 ist eine alternative Ausgestaltung einer Konvertierungsvorrichtung abgebildet. Die Konvertierungsvorrichtung 108 besteht im wesentlichen aus einem rechteckigen Rahmen 114, welcher die Schaltfingerwellen 111, 112, sowie weitere Wellen 119, trägt. Der Rahmen 114 ist bezüglich seiner Längsachse drehbar gelagert. Hierzu sind an den beiden Stirnseiten des Rahmens 114 Drehlager 115 angebracht. Mit der Schaltfingerwelle 111 ist der Schalthebel 104 fest verbunden. Die Schaltfingerwellen 111, 112 sowie die weiteren Wellen 119 sind parallel und quer zur Drehachse des Rahmens 114 angeordnet. Der Schalthebel 104 bildet in seiner Verlängerung den Schaltfinger 113a. Die zugehörige Schaltfingerwelle 111 ist drehbar im Rahmen 114 gelagert. Die ebenfalls im Rahmen 114 gelagerte Schaltfingerwelle 112 trägt einen zweiten Schaltfinger 113b. Die beiden Schaltfinger 113a, 113b sind mittels der Hebel 124, 125 miteinander gekoppelt. Hierzu ist im Hebel 124 eine Längsnut 126 angebracht, und auf dem Hebel 125 des Schaltfingers 113b ist ein Bolzen 127 angebracht, welcher senkrecht in die Nut 126 des Hebels 124 eingreift. Damit sind die beiden Schaltfinger 113a, 113b, bzw. die beiden Schaltfingerwellen 111, 112 dermaßen miteinander gekoppelt, dass eine Bewegung des Schalthebels 104 entlang einer Schaltgassenrichtung 105 eine gegensinnige Bewegung der beiden Schaltfinger 113a, 113b bewirkt. Auf den Wellen 119, welche ebenfalls im Rahmen 114 gelagert sind, sitzen die Schaltausleger 116. Diese Schaltausleger 116 sind mit den Schaltfingern 113a, 113b gekoppelt. Dazu sind jedem der beiden Schaltfinger 113a, 113b je zwei Schaltausleger zugeordnet. Die Schaltausleger 116 sind mit Führungsnuten 117 ausgestaltet, in welche Führungselemente 118, welche auf den beiden Schaltfingern 113a, 113b fest angebracht sind, eingreifen. Wird der Schalthebel 104 entlang der Wählgassenrichtung 107 seines Schaltbildes bewegt, wird damit die komplette Konvertierungsvorrichtung 108 um ihre Drehachse, welche durch die beiden Drehlager 115 gebildet wird, verschwenkt.

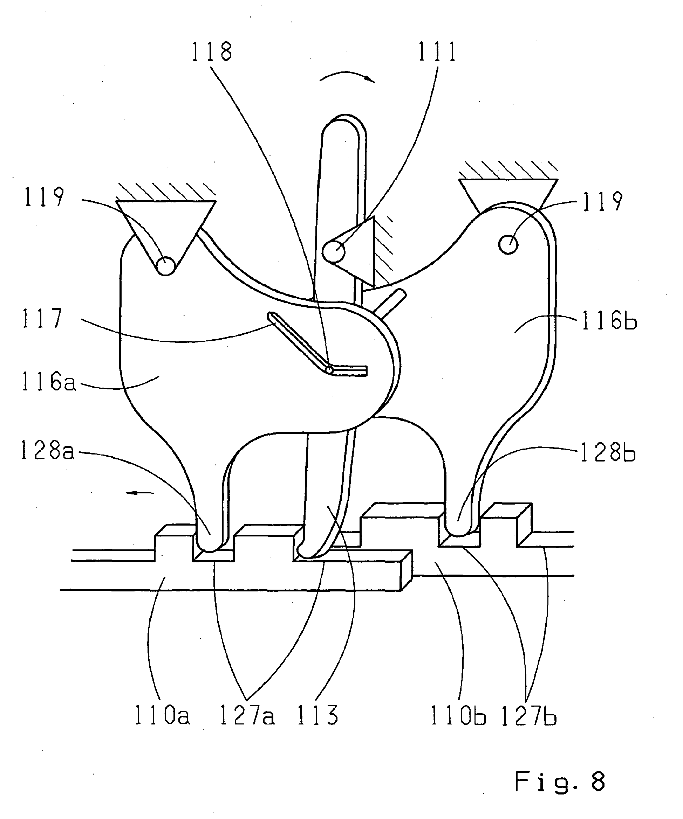

Fig. 8 zeigt als Einzeldarstellung einen Schaltfinger 113, welchem zwei Auslegeelemente 116 zugeordnet sind, sowie zwei Schaltstangen 110a und 110b. Der Schaltfinger 113 und die zwei zugehörigen Schaltauslegeelemente 116a, 116b, liegen mit der vorderen Schaltstange 110a in einer Ebene. Hierbei greifen ein Schaltauslegefinger 128a des Schaltauslegers 116a sowie der Schaltfinger 113 in Schaltnuten 127a der Schaltstange 110a ein. Wird mittels eines nicht dargestellten Schalthebels der Schaltfinger 113 im Uhrzeigersinn verdreht, schiebt der Schaltfinger 113 die Schaltstange 110a nach links. Hierbei dreht sich der Schaltausleger 116a um seine Drehachse, die durch die Welle 119 festgelegt ist. Die Bewegung des Schaltauslegers 116a erfolgt im wesentlichen durch die Verschiebung der Schaltstange 110a, da der Schaltauslegefinger 128a in einer ihm zugeordneten Schaltnut 127a der Schaltstange 110a geführt wird. Das Führungselement 118, welches mit dem Schaltfinger 113 fest verbunden ist, läuft hierbei in der Führungsnut 117 des Schaltauslegers 116a im winkelig zur Schaltstange 110a gebildeten Teilbereich der Führungsnut 117 entlang. Der rechte Schaltausleger 116b, welcher nicht in Verbindung mit der Schaltstange 110a, ist identisch dem linken Schaltausleger 116a ausgebildet. In die nicht dargestellte Führungsnut des rechten Schaltauslegers greift ebenfalls ein Führungselement, welches auf dem Schaltfinger 113 befindlich ist, ein. Bei Verschwenken des Schaltfingers 113 im Uhrzeigersinn verläuft dieses Führungselement im, im wesentlich zur Schaltstange 110a parallel gebildeten Teilbereich der Führungsnut des Schaltauslegers 116b. Bei Verschwenken des Schaltfingers 113 im Uhrzeigersinn aus einer Neutralstellung heraus, wird das Schaltauslegeelement 116b nicht gedreht, da die Führungsnut exakt der Bahn des Führungselementes entspricht. Wird zum Auslegen des mit der Schaltstange 110a geschalteten Ganges der Schaltfinger 113 gegen den Uhrzeigersinn nach links gedreht, läuft das Führungselement 118 in der Führungsnut 117 des Schaltauslegers 116a zurück. Hierbei bewirkt das Führungselement 118 eine Drehung des Schaltauslegers 116a entgegen dem Uhrzeigersinn. Dadurch wird mittels des Schaltauslegefingers 128a die Schaltstange 110a nach rechts verschoben, was ein Auslegen der aktuell eingelegten Gangstufe bewirkt. Bei Erreichen der Neutralstellung, welche einer Wählrichtung des Schalthebels entspricht, hat das Führungselement 118 den Knick in der Führungsnut 117 erlangt. Ab hier verläuft es im rechten Teilbereich der Führungsnut 117, welcher die Bahn des Führungselementes 118 beschreibt, damit bedingt ein weiteres Verdrehen des Schaltfingers 113 entgegen dem Uhrzeigersinn kein zwangsgekoppeltes Verdrehen des Schaltauslegers 116a. Dadurch kann der Schaltfinger 113 aus der hier abgebildeten Neutralposition weiter gegen den Uhrzeigersinn gedreht werden, ohne dass der Schaltausleger 116a die Schaltstange 110a nach rechts verschiebt und dadurch eine Gangstufe einlegt. Um eine Gangstufe mittels des Schaltfingers 113 zu schalten, welche der Schaltstange 110b zugeordnet ist, muss der Schalthebel entlang der Wählgasse 107 verschwenkt werden, wobei der Schaltfinger 113 sowie die beiden Schaltausleger 116a, 116b parallel zu den beiden Schaltstangen 110a, 110b verschwenkt werden. Dadurch greift der Schaltauslegefinger 128b und der Schaltfinger 113 in Schaltnuten 127b der Schaltstange 110b ein.

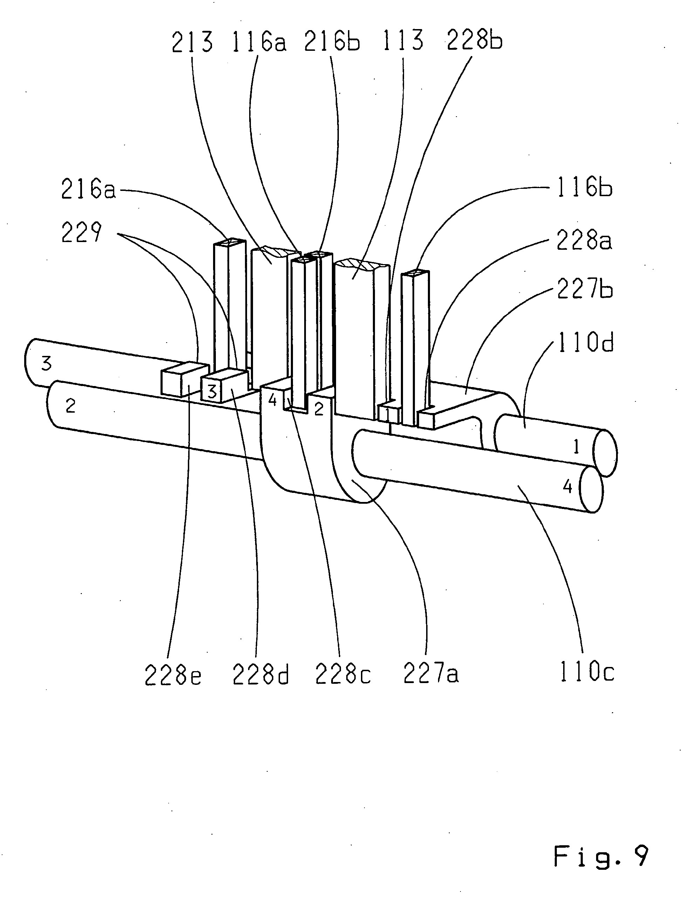

In Fig. 9 sind in symbolhafter Weise die Schaltfinger 113, 213 sowie die zugehörigen Schaltausleger 116a,b und 216 a,b im Zusammenwirken mit zwei Schaltstangen 110c, 110d gezeigt. Die Schaltfinger mit ihren zugehörigen Schaltauslegern sind in zwei parallelen Ebenen angeordnet. Hierbei ist der Schaltfinger 113 sowie die Schaltausleger 116a, 116b in einer Ebene angeordnet, und der Schaltfinger 213 mit seinen Schaltauslegern 216a, 216b in der zweiten parallelen Ebene dazu angeordnet. Auf den beiden Schaltstangen 110c, 110d sind Schaltnutenelemente 227a, 227b fest montiert. Das Schaltnutenelement 227a ist auf der Schaltstange 110c angeordnet, wobei es eine Schaltnut 228c trägt, welche sich im wesentlichen senkrecht über der Schaltstange 110c in der Ebene des Schaltfingers 113 befindet. In diese Schaltnut 228c greift der Schaltausleger 116a des Schaltfingers 113 ein. Der Schaltfinger 113 befindet sich im hier gezeigten Neutralzustand der Schaltvorrichtung, mit seinem unteren Ende direkt neben dem Schaltnutenelement 227a. Mittels der Schaltstange 110c können der zweite sowie der vierte Gang geschalten werden. Das Einlegen des zweiten Ganges erfolgt durch Verschieben der Schaltstange 110c nach links. Zum Einlegen des vierten Ganges muss die Schaltstange 110c nach recht verschoben werden. Der Schaltstange 110d ist ebenfalls ein Schaltnutenelement 227b zugeordnet. Das Schaltnutenelement 227b ist vorzugsweise einstückig ausgebildet und besteht aus einem hülsenartigen ersten Teilbereich, welcher die Schaltstange 110d umschließt sowie einem plattenartigen Teilbereich, welcher parallel zur Ebene der Schaltstangen ausgebildet ist und die Schaltstange 110c übergreift. Dem plattenartigen Teilbereich sind Schaltnuten 228a, 228b, 228d, 228e zugeordnet. In der hier gezeigten Schaltposition, in welcher sich der Schalthebel in der Neutralstellung der Gasse des ersten und zweiten Ganges befindet, greift der Schaftausleger 116b in die Schaltnut 228a ein. Die Schaltnuten des Schaltnutenelementes 227b liegen in einer Linie mit der Schaltnut 228c des Schaltnutenelementes 227a. Der Schaltfinger 113 liegt mit seiner linken unteren Flanke an der Außenseite des Schaltnutenelementes 227a an. Mit seiner rechten Flanke liegt er an der Schaltnut 228b des Schaltnutenelmentes 227b an. Eine Verschiebung des Schaltfingers 113 nach links bewirkt eine Verschiebung der Schaltstange 110c in Richtung Einlegen des zweiten Ganges. Hierbei bleibt die Schaltstange 110d unverschoben. Eine Verschiebung des Schaltfingers 113 nach rechts aus der hier gezeigten Schaltposition bewirkt mittels der Schaltstange 110d ein Einlegen des ersten Ganges. Durch die Invertierungsvorrichtung bewirkt eine Verschiebung des Schaltfingers 113 eine gegensinnige Verschiebung des Schaltfingers 213. Die Verschiebung des Schaltfingers 213 bleibt jedoch ohne Wirkung, da der Schaltfinger 213 sowie die beiden Schaltausleger 216a, 216b in einer Quernut 229 des Schaltnutenelementes 227b, welche im wesentlichen parallel zu den Schaltstangen verläuft, laufen.

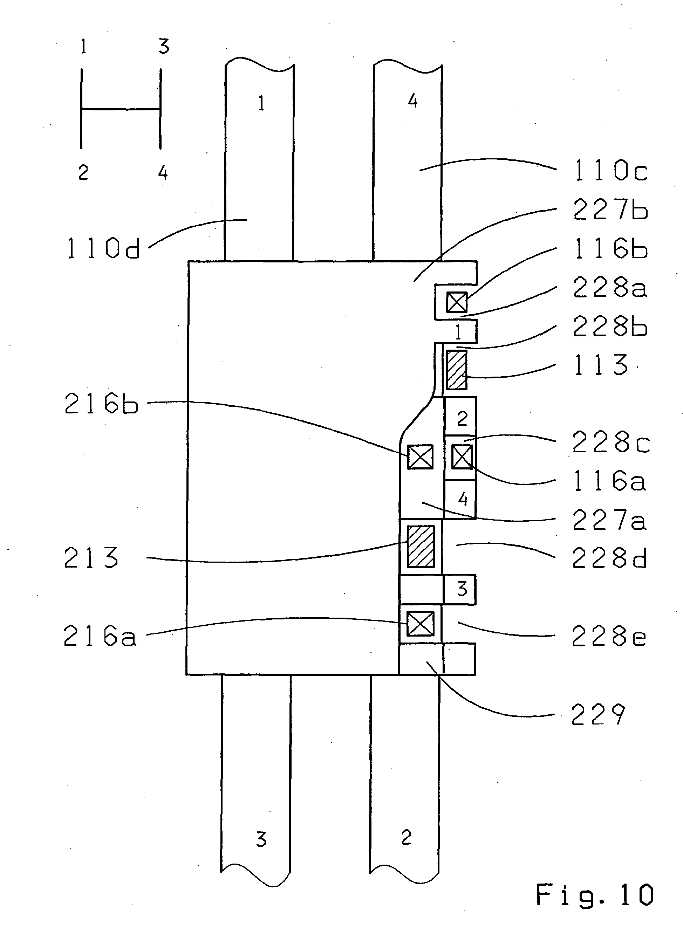

In Fig. 10 ist eine Aufsicht der Schaltvorrichtung aus Fig. 9 gezeigt. Hierbei ist deutlich zu erkennen, dass das Schaltnutenelement 227b sich über beide Schaltstangen 110c, 110d erstreckt und die Nut 228c des Schaltnutenelements 227a in einer Linie mit den Nuten 228a, 228b, 228d, und 228e liegt. Der erste und zweite Gang werden beide mittels des Schaltfingers 113 geschalten. Dabei tritt der Schaltfinger beim Einlegen des ersten Ganges mit dem Schaltnutenelement 227b in Kontakt und verschiebt dieses nach oben. Der Schaltausleger 116a bleibt bei dieser Bewegung des Schaltfingers 113 unbewegt. Zum Auslegen des ersten Ganges schiebt der Schaltausleger 116b das Schaltnutenelement 227b und damit die Schaltstange 110d zurück. Zum Einlegen des zweiten Ganges schiebt der Schaltfinger 113 das Schaltnutenelement 227a und damit die Schaltstange 110c nach unten. Der Schaltausleger 116b bleibt bei dieser Bewegung des Schaltfingers 113 unbewegt. Zum Auslegen des zweiten Ganges wird der Schaltfinger 113 zurück in die gezeigte Position gebracht, dabei verschiebt der Schaltausleger 116a die Schaltstange 110c zurück in die Neutralstellung.
Wird der Schalthebel in die Gasse des dritten und vierten Ganges gebracht, werden die Schaltfinger 113, 213 sowie die Schaltausleger 116a, 116b, 216a, 216b parallel nach rechts verschoben. Dabei tritt der Schaltausleger 216b in die Schaltnut 228c, der Schaltfinger 213 in die Schaltnut 228d und der Schaltausleger 216a in die Schaltnut 228e ein. Eine Bewegung des Schalthebels in die Schaltposition des dritten Ganges, welche in der gleichen Schalthebelrichtung wie der erste Gang liegt, erzeugt mittels der Invertierungsvorrichtung eine Bewegung des Schaltfingers 213 nach unten. Dabei tritt der Schaltfinger 213 mit dem Schaltnutenelement 227b in Kontakt und verschiebt mittels diesem die Schaltstange 110d nach unten in Richtung Schaltposition des dritten Ganges. Der Schaltausleger 216b bleibt bei dieser Bewegung des Schaltfingers 213 unbewegt. Zum Auslegen des dritten Ganges verschiebt der Schaltausleger 216a die Schaltstange 110d zurück. Der Schaltfinger 113 und die Schaltausleger 116a, 116b bewegen sich hierbei frei neben den Schaltnutenelementen 227a, 227b. Beim Einlegen des vierten Ganges verschiebt der Schaltfinger 213 das Schaltnutenelement227a, und damit die Schaltstange 110c nach oben. Der Schaltausleger 216a bleibt bei dieser Bewegung des Schaltfingers 213 unbewegt. Ausgelegt wird der vierte Gang beim Zurückziehen des Schalthebels in die Neutral- bzw. Wählposition mittels des Schaltauslegers 216b.

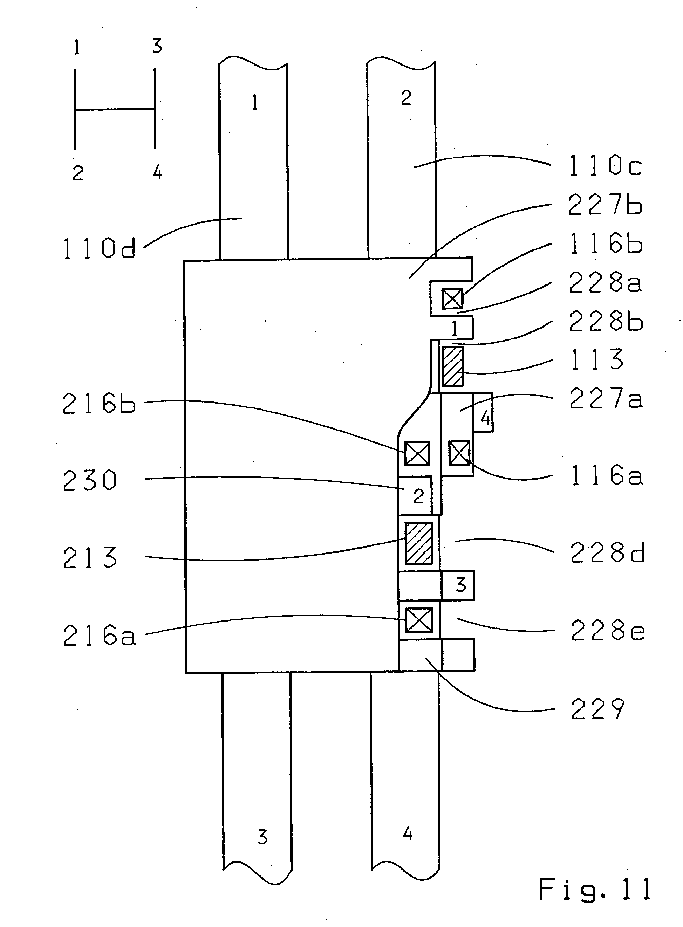

Fig. 11 zeigt eine Aufscht der Schaltvorrichtung entsprechend Fig. 10, wobei die Gänge der Schaltstange 110c vertauscht sind. Der zweite Gang-wird durch Verschieben der Schaltstange 110c nach oben eingelegt, der vierte Gang durch verschieben nach unten. Daher müssen beim Schalten in der Schaltgasse des ersten und zweiten Ganges beide Schaltstangen zum Einlegen ihres jeweiligen Ganges (erster oder zweiter) nach oben verschoben werden. Dies wird dadurch ermöglicht, dass die beiden Schaltnutenelemente 227a, 227b derart ausgebildet sind, dass beim Einlegen des ersten Ganges gemäß Fig. 10 der Schaltfinger 113 das Schaltnutenelement 227b und damit sie Schaltstange 110d nach oben schiebt. Das Auslegen des ersten Ganges erfolgt wie in Figur 10 beschrieben. Der Schaltfinger 213 und der Schaltausleger 216a bewegen sich beim Ein- und Auslegen des ersten Ganges in der Quernut 229 des Schaltnutenelementes 227b und verschieben dieses nicht. Der Schaltausleger 216b bleibt währenddessen ortsfest bezüglich des Schaltnutenelementes 227b. Beim Schalten des zweiten Ganges bewegt sich der Schaltfinger 213 aufgrund der Kopplung der beiden Schaltfinger 113, 213 mittels der Invertierungsvorrichtung gegenläufig zur Bewegung des Schaltfingers 113 nach oben. Dabei gelangt der Schaltfinger 113 in Kontakt mit der Schalterhebung 230, welche sich auf dem Schaltnutenelement 227a befindet und sich in Richtung der Schaltfinger erstreckt, und verschiebt dieses und damit die Schaltstange 110c nach oben. Gleichzeitig bewegt sich der Schaltfinger 113 samt zugehörigem Schaltausleger116a frei, in einer, in Schaltstangenrichtung verlaufenden, Quernut des Schaltnutenelements 227a, nach unten. Der Schaltausleger 116b, bleibt währenddessen relativ zum Schaltnutenelement 227b ortsfest, sodass dieses beim Einlegen des zweiten Ganges nicht bewegt wird. Zum Auslegen des zweiten Ganges drückt der Schaltausleger 216b gegen die Schalterhebung 230 und verschiebt damit das Schaltnutenelement 227a und damit die Schaltstange 110c nach unten. Beim Anwählen der Schaltgasse des dritten und vierten Ganges verschieben sich die beiden Schaltfinger 113, 213 mitsamt allen Schaltauslegern 116a, 116b, 216a, 216b nach rechts, sodass der Schaltfinger 213 mit seinen Schaltauslegern 216a, 216b in der Ebene liegt, in der vorher der Schaltfinger 113 mit seinen Schaltauslegern 116a, 116b lag. Beim Einlegen des dritten Ganges verschiebt sich der Schaltfinger 213 nach unten wobei er das Schaltnutenelement 227b und damit die Schaltstange 110d nach unten verschiebt, da er sich nun nicht mehr frei in der Quernut 229 bewegt. Der Schaltfinger 113 und der Schaltausleger 116b verschieben sich neben dem Schaltnutenelement 227b frei nach oben, während der Schaltausleger 116a relativ zum Schaltnutenelement 227a ortsfest bleibt. Beim Auslegen des dritten Ganges schiebt der Schaltausleger 216a das Schaltnutenelement 227b nach oben zurück in die Neutralstellung. Beim Einlegen des vierten Ganges schiebt der Schaltfinger 113 das Schaltnutenelement 227a nach unten, während der Schaltfinger 213 und der Schaltausleger 216b sich frei nach oben bewegen. Der Schaltausleger 216a bleibt relativ zum Schaltnutenelement 227b ortsfest. Zum Auslegen des vierten Ganges schiebt der Schaltausleger 116a das Schaltnutenelement 227a nach oben zurück in die Neutralstellung.

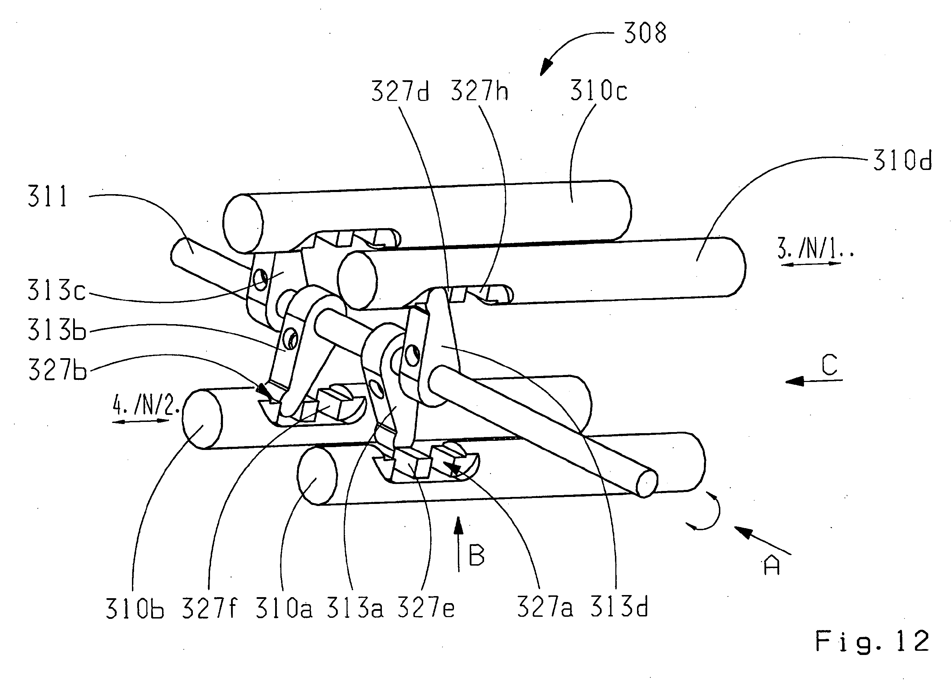

In einer weiteren alternativen Ausbildung der Erfindung (Fig. 12) ist beispielsweise vorgesehen, die Konvertierungs- bzw. Invertierungsvorrichtung 308 aus einer Schaltfingerwelle 311 und mehreren Schaltstangen 310a bis d zu bilden, wobei die Schaltfingerwelle 311 im wesentlichen rechtwinklig zu den Schaltstangen 310a bis d angeordnet ist. Dabei sind die beiden Schaltstangen 310a und b (in Einbaulage eines Getriebes in einem Kraftfahrzeug gesehen) beispielsweise unterhalb und die beiden anderen Schaltstangen 310c und d oberhalb oder auch seitlich links und rechts der Schaltfingerwelle 311 vorgesehen. In den Schaltstangen 310a bis d sind jeweils zwei Schaltnuten 327a bis d und e bis h vorgesehen, welche mit den gezeigten Schaltfingern 313a bis d sowie mit weiteren, nicht gezeigten Schaltfingern korrespondieren. Bei einer Drehbewegung der Schaltfingerwelle 311, beispielsweise im Uhrzeigersinn, schwenkt der Schaltfinger 313d in der Schaltnut 327d ebenfalls im Uhrzeigersinn, so dass die Schaltstange 310d nach rechts in Richtung des ersten Gangs (1.) verschoben wird. Gleichzeitig schwenkt der Schaltfinger 313b bei einer Drehung der Schaltfingerwelle 311 im Uhrzeigersinn aus der korrespondierenden Schaltnut 327b der Schaltstange 310b heraus, so dass die Schaltstange 310b keine Verschiebung ausführt. Die übrigen Schaltstangen 310a und c sind mit den korrespondierenden Schaltfingern 313a und c nicht in Verbindung, so dass auch diese Schaltstangen 310a und c keine Schaltbewegung ausführen.

Wird die Schaltfingerwelle 311 mittels des nicht gezeigten zugehörigen Schalthebels entgegen dem Uhrzeigersinn gedreht, so wird einerseits die Schaltstange 310d mittels des Schaltfingers 313d wieder nach links in die Neutralposition (N) zurückgeschoben und andererseits die Schaltstange 310b durch den Schaltfinger 313b nach rechts verschoben und der zweite Gang (2.) eingelegt.

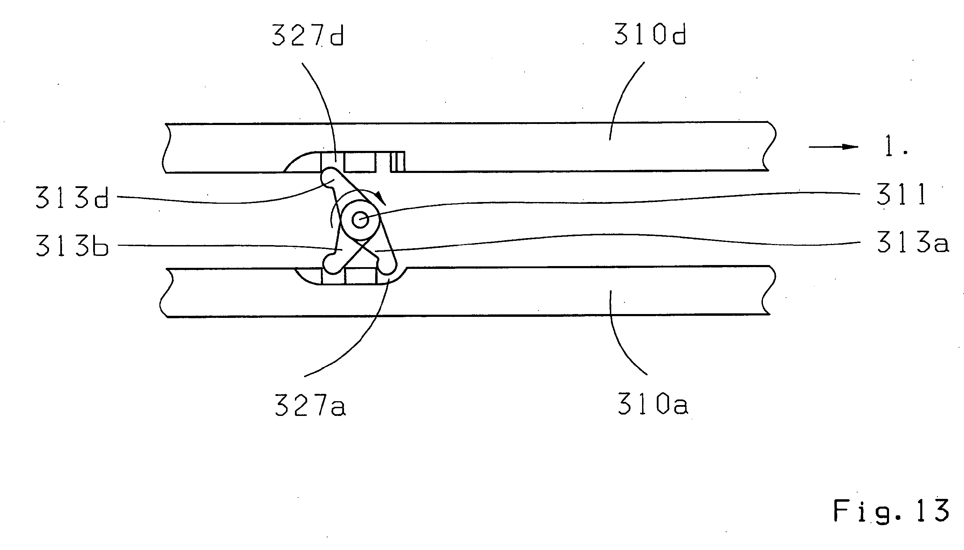

Die Einzelansichten A, B, C in Fig. 12 sind in den nachfolgenden Fig. 13, 14, 15 nochmals vergrößert darstellt.

So ist Fig. 13 entnehmbar, dass der Schaltfinger 313d in der Schaltnut 327d der Schaltstange 310d anliegt. Bei einer Drehbewegung der Schaltfingerwelle 311 im Uhrzeigersinn wird die Schaltstange 310d mittels des Schaltfingers 313d nach rechts verschoben und somit beispielsweise der erste Gang (1.) eingelegt. Der Schaltfinger 313b befindet sich in der Nut 327b der in Fig. 13 nicht gezeigten Schaltstange 310b, welche sich in Bildebene hinter der gezeigten Schaltstange 310a befindet. Der Schaltfinger 313a ist nicht im Eingriff mit der korrespondierenden Nut 327a der Schaltstange 310a und schwenkt somit in eine Ebene parallel zur Schaltstange 310a, ohne die Schaltstange 310a zu betätigen. Die in Fig. 13 gezeigte Position der Schaltstange 310a und d sowie der zugehörige Schaltfinger 313a, b, d entspricht der Neutralposition.

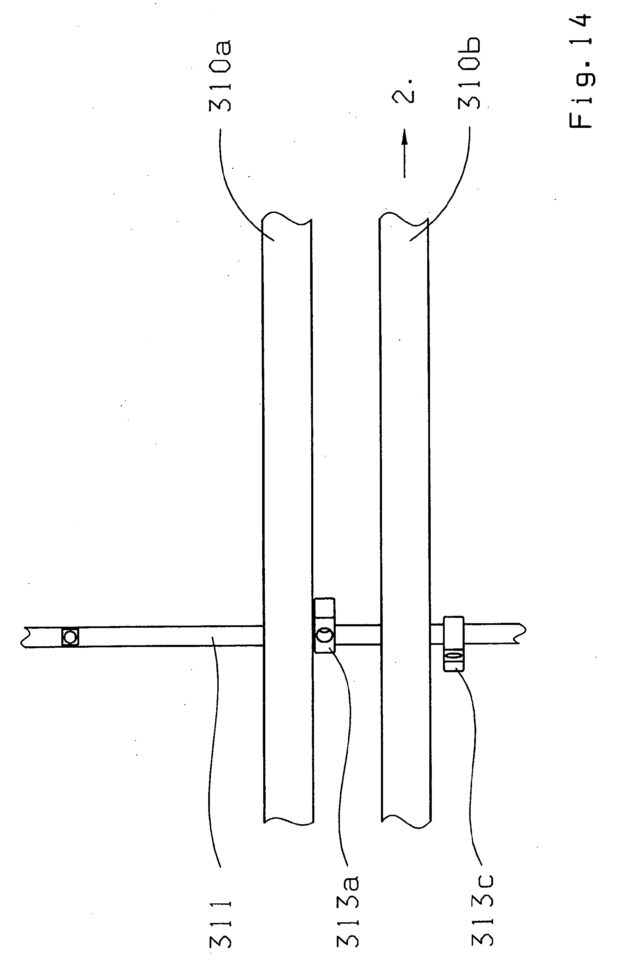

Wird die Schaltfingerwelle 311 (Fig. 13, 14) gegen den Uhrzeigersinn wieder zurückgedreht, so wird die Schaltstange 310d wieder in die gezeigte Neutralposition zurückgeschoben und der erste Gang (1.) ausgelegt. Bei einer weiteren Drehbewegung der Schaltfingerwelle 311 gegen den Uhrzeigersinn schwenkt der Schaltfinger 313d aus der Schaltnut 327d der Schaltstange 310d nach links heraus, und der Schaltfinger 313b taucht in die Schaltnut 327b der Schaltstange 310b ein und verschiebt die Schaltstange 310b nach rechts - der zweite Gang (2.) ist eingelegt.

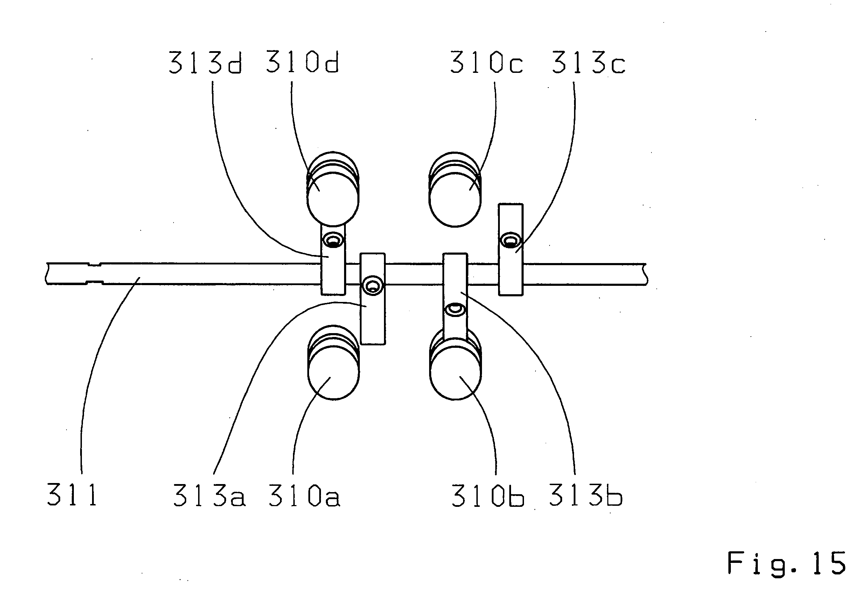

Bei der in den Fig. 14 und 15 gezeigten Positionen der Schaltfingerwelle 311 sind die Schaltfinger 313a und c nicht im Eingriff.

Bei allen hier gezeigten Ausgestaltungen der erfindungsgemäßen Schaltvorrichtung wird erfindungsgemäß angewendet, dass die Schaltfinger, welche bei Schaltpositionen von Gängen einer Schaltgasse Schaltmittel innerhalb des Getriebes in dieselbe Richtung verschieben müssen, entweder mit Schaltstangen auf gegenüberliegenden Seiten der Schaltfingerwelle zusammenwirken oder auf verschiedenen, mittels einer Invertierungsvorrichtung verbundenen Schaltfingerwellen angebracht sind. Sollen die Verschieberichtungen der Schaltmittel gegenläufig sein, müssen die Schaltmittel mit einem oder verschiedenen Schaltfingern derselben Schaltfingerwelle verschoben werden.

### Bezugszeichen

- 1: Kraftfahrzeuggetriebe
- 2: Schaltpaket
- 3: Übersetzungsstufen
- 4: Schalthebel
- 5: Schaltgasse
- 6: Schaltbild
- 7: Wählgasse
- 8: Konvertierungsvorrichtung
- -:
- 10a, b, c, d: Schaltstange
- 11: Schaltfingerwelle
- 12: weitere Schaltfingerwelle
- 13a bis h: Schaltfinger
- 14: Zahnsegment
- 15: Zahnstange
- 16: Doppelkupplung
- 17: Hohlwelle
- 18: Vollwelle
- 19a, b, c, d: Losräder
- 20a, b, c, d: Festräder
- 21: Vorgelegewelle
- 23: Schaltkulisse
- 24: Zahnrad
- 25: Zahnrad
- 26: Führungselement
- 27a bis h: Schaltnuten
- 104: Schalthebel
- 105: Schaltgassenrichtung
- 107: Wählgassenrichtung
- 108: Konvertierungsvorrichtung
- 110a, b, c, d: Schaltstangen
- 111: Schaltfingerwelle
- 112: Schaltfingerwelle
- 113a, b: Schaltfinger
- 114: Rahmen
- 115: Drehlager
- 116a, b: Schaltausleger
- 117: Nuten
- 118: Führungselemente
- 119: Wellen
- 124: Hebel
- 125: Hebel
- 126: Nut
- 127a, b: Schaltnuten
- 128a, b: Schaltauslegefinger
- 213: Schaltfinger
- 216a, b: Schaltausleger
- 227a, b: Schaltnutenelement
- 228a bis d: Schaltnuten
- 229: Quernut
- 230: Schalterhebung
- 308: Konvertierungsvorrichtung
- 310a bis d: Schaltstange
- 311: Schaltfingerwelle
- 313a bis d: Schaltfinger
- 327 a bis d: Schaltnut
- d bis h: Schaltnut

- A, B, C: Ansicht

## Patentansprüche

1. Schaltvorrichtung für ein mehrstufiges Getriebe, insbesondere für ein Kraftfahrzeug, wobei in dem Getriebe mindestens einem Schaltpaket zwei nicht aufeinanderfolgende Übersetzungsstufen zugeordnet sind und ein Schalthebel zur Betätigung der Schaltpakete vorgesehen ist, und wobei dem Schalthebel ein Schaltbild zugeordnet ist, bei dem sich im wesentlichen die Schaltstellungen je zwei aufeinanderfolgender Gänge in Schaltgassen gegenüberliegen, und wobei die innerhalb einer Schaltgasse auswählbaren Gänge unterschiedlichen Schaltpaketen zugeordnet sind, **dadurch gekennzeichnet, dass** der Schalthebel (4) mit einer Schaltfingerwelle (11, 311) verbunden ist und diese mittels des Schalthebels (4) axial verschiebbar und radial verschwenkbar ist, und dass der Schaltfingerwelle (11, 12, 311) mindestens ein Schaltfinger (13, 313) zugeordnet ist, und dass der Schaltfinger (13, 313) auf der Schaltfingerwelle (11, 12, 311) derart angeordnet ist, so dass der Schaltfinger (13, 313) in Neutralposition nicht senkrecht zu einer Schaltstange (310) verläuft, und dass der betreffende Schaltfinger (313) beim Schwenken in eine Richtung die Schaltstange (310) bzw. das Schaltpaket betätigt und beim Schwenken des Schaltfingers (313) in die entgegengesetzte Richtung der Schaltfinger (313) freigeht und die Schaltstange (310) nicht betätigt, wobei die Schaltstange (310) mit dem Schaltfinger (313) kinematisch gekoppelt ist, bis wieder die NeutralPosition erreicht ist.

2. Schaltvorrichtung nach Anspruch 1, **dadurch gekennzeichnet, dass** zwischen dem Schalthebel (4) und dem mindestens einen Schaltpaket (2) eine Konvertierungsvorrichtung (8) vorgesehen ist, welche eine Bewegung des Schalthebels (4) in eine Bewegung eines Schaltmittels, welches eine dem geschalteten Gang entsprechende Übersetzungstufe (3) einlegt, umwandelt.

3. Schaltvorrichtung nach Anspruch 1 oder 2, **dadurch gekennzeichnet, dass** die Konvertierungsvorrichtung (8) als direkte oder indirekte Verbindung zwischen dem Schalthebel (4) und dem mindestens einen Schaltpaket (2) ausgebildet ist.

4. Schaltvorrichtung nach Anspruch 1, 2 oder 3, **dadurch gekennzeichnet, dass** die Konvertierungsvorrichtung (8) als mechanische, hydraulische oder pneumatische Verbindung oder als Kombination von wenigstens zwei der vorgenannten Verbindungen ausgebildet ist.

5. Schaltvorrichtung nach Anspruch 1, 2 ,3 oder 4, **dadurch gekennzeichnet, dass** die Konvertierungsvorrichtung (8) als Schaltgestänge oder als Kabel-/Seilschaltung oder als Kombination von beiden ausgebildet ist.

6. Schaltvorrichtung nach einem der vorherigen Ansprüche, **dadurch gekennzeichnet, dass** dem Schalthebel (4) ein Schaltbild (6) zugeordnet ist, welches als H oder Mehrfach-H ausgebildet ist, bei dem sich im wesentlichen Schaltstellungen benachbarter Übersetzungsstufen gegenüberliegen,

7. Schaltvorrichtung nach einem der vorherigen Ansprüche, **dadurch gekennzeichnet, dass** mit dem Schalthebel (4) innerhalb einer Schaltgasse (5) aufeinanderfolgende Übersetzungsstufen des Getriebes (1) schaltbar sind, wobei mindestens eine der Übersetzungsstufen (3) mittels eines Schaltpaketes (2), welchem zwei nicht aufeinanderfolgende Übersetzungsstufen (3) zugeordnet sind, geschaltet wird.

8. Schaltvorrichtung nach einem der vorherigen Ansprüche, **dadurch gekennzeichnet, dass** jeder Schaltgasse (5) mindestens zwei Schaltpakete (2) zugeordnet sind.

9. Schaltvorrichtung nach einem der vorhergehenden Ansprüche, **dadurch gekennzeichnet, dass** bei Verschieben des Schalthebels (4) in mindestens einer Wählgasse (7) des Schaltbildes (6) mindestens zwei Schaltpakete (2) mittels mit den Schaltpaketen(2) verbundenen Schaltmitteln (9) mit dem Schalthebel (4) gleichzeitig verbindbar sind.

10. Schaltvorrichtung nach einem der vorhergehenden Ansprüche, **dadurch gekennzeichnet, dass** die Konvertierungsvorrichtung eine Invertierungsvorrichtung enthält, durch die eine zu einer Schaltbewegung des Schalthebels in einer Schaltgasse gleichsinnige Bewegung eines Schaltmittels erzeugbar ist.

11. Schaltvorrichtung nach Anspruch 10, **dadurch gekennzeichnet, dass** mit der Schaltfingerwelle (11) mindestens eine weitere Schaltfingerwelle (12) gekoppelt ist.

12. Schaltvorrichtung nach Anspruch 11, **dadurch gekennzeichnet, dass** die Kopplung der Schaltfingerwellen (11, 12) mittels auf den Wellen befestigter Zahnräder erfolgt.

13. Schaltvorrichtung nach Anspruch 11 oder 12, **dadurch gekennzeichnet, dass** die Anordnung der Schaltfingerwellen (11, 12) in einer oder mehreren Ebenen erfolgt.

14. Schaltvorrichtung nach einem der Ansprüche 10 bis 13, **dadurch gekennzeichnet, dass** die Schaltfingerwellen (11, 12) derart gekoppelt sind, dass eine Wählbewegung des Schalthebels (4) alle Schaltfingerwellen (11, 12) parallel verschiebt und/oder eine Schaltbewegung des Schalthebels (4) benachbarte Schaltfingerwellen (11, 12) gegensinnig/invers verdreht.

15. Schaltvorrichtung nach Anspruch 1, **dadurch gekennzeichnet, dass** in mindestens einer Schaltgasse (5) mindestens zwei Schaltfinger (13) verschiedener Schaltfingerwellen (11, 12) in verschiedene Schaltstangen (10) eingreifen.

16. Schaltvorrichtung nach Anspruch 1, **dadurch gekennzeichnet, dass** in mindestens einer Schaltgasse (5) mindestens zwei Schaltfinger (13) der selben Schaltfingerwelle (11, 12) in verschiedene Schaltstangen (10) eingreifen.

17. Schaltvorrichtung nach einem der vorhergehenden Ansprüche, **dadurch gekennzeichnet, dass** beim Verdrehen der Schaltfingerwelle (11) in einer Drehrichtung mindestens ein Schaltfinger (13) der einen Schaltfingerwelle (11, 12) außer Eingriff der einen Schaltstange (10) gebracht wird und mindestens ein anderer Schaltfinger (13) der anderen Schaltfingerwelle (12, 11) die andere Schaltstange (10) verschiebt.

18. Schaltvorrichtung nach Anspruch 17, **dadurch gekennzeichnet, dass** beim Verdrehen der Schaltfingerwelle (11) in gegensinnger/inverser Drehrichtung mindestens ein Schaltfinger (13) der anderen Schaltfingerwelle (12, 11) außer Eingriff der anderen Schaltstange (10) gebracht wird und mindestens ein Schaltfinger (13) der einen Schaltfingerwelle (11, 12) die eine Schaltstange (10) verschiebt.

19. Schaltvorrichtung nach einem der Ansprüche 1 bis 16, **dadurch gekennzeichnet, dass** beim Verdrehen der Schaltfingerwelle (11) in einer Drehrichtung mindestens ein Schaltfinger (13) der einen Schaltfingerwelle (11, 12) außer Eingriff der einen Schaltstange (10) gebracht wird und mindestens ein anderer Schaltfinger (13) der selben Schaltfingerwelle (11, 12) die andere Schaltstange (10) verschiebt.

20. Schaltvorrichtung nach einem der Ansprüche 1 bis 16, **dadurch gekennzeichnet, dass** beim Verdrehen der Schaltfingerwelle (11) in beiden Drehrichtungen mindestens ein Schaltfinger (13) einer Schaltfingerwelle (11, 12) eine Schaltstange (10) verschiebt.

21. Schaltvorrichtung nach einem der vorhergehenden Ansprüche, **dadurch gekennzeichnet, dass** die Konturen der Schaltstangen (10) derart ausgebildet sind, so dass mittels der Schaltfinger (13) die Schaltstangen (10) entweder in eine Schaltposition oder eine Neutralposition schaltbar sind.

22. Schaltvorrichtung nach einem der vorhergehenden Ansprüche, **dadurch gekennzeichnet, dass** die Kontur der Schaltfinger (13) derart ausgebildet ist, so dass über die Kontur das Kraft-Übersetzungsverhältnis einstellbar ist.

23. Schaltvorrichtung nach einem der Ansprüche 1 bis 10, **dadurch gekennzeichnet, dass** zur Übertragung der Bewegung des Schalthebels (4) auf die Schaltmittel (9) wenigstens ein Zahnsegment (14) und wenigstens eine Zahnstange (15) vorgesehen sind.

24. Schaltvorrichtung nach einem der Ansprüche 1 bis 9, **dadurch gekennzeichnet, dass** beim Verschieben des Schalthebels (4) in einer Wählgasse (7) des Schaltbildes (6) mindestens zwei Schaltpakete (2) mittels mit den Schaltpaketen verbundenen Schaltauslegern beauf-schlagbar sind.

25. Schaltvorrichtung nach einem der Ansprüche 1 bis 10, **dadurch gekennzeichnet, dass** die Invertierungsvorrichtung im wesentlichen aus einer Schaltfingerwelle (311) und mehreren Schaltstangen (310) besteht, wobei die Schaltfingerwelle (311) im wesentlichen rechtwinklig zu den Schaltstangen (310) angeordnet ist.

26. Schaltvorrichtung nach Anspruch 25, **dadurch gekennzeichnet, dass** die Schaltstangen (310) im wesentlichen in zwei Ebenen auf gegenüberliegenden Seiten der Schaltfingerwelle (311) angeordnet sind.

27. Schaltvorrichtung nach Anspruch 25 oder 26, **dadurch gekennzeichnet, dass** auf der Schaltfingerwelle (311) Schaltfinger (313) vorgesehen sind, welche mit Schaltnuten (327) in den Schaltstangen (310) zusammenwirken.

28. Schaltvorrichtung nach Anspruch 1, **dadurch gekennzeichnet, dass** der Schalthebel starr mit der Schaltfingerwelle (311) verbunden ist.

29. Schaltvorrichtung nach Anspruch 1, **dadurch gekennzeichnet, dass** zum Einlegen eines Gangs durch Betätigung des Schalthebels der betreffende Schaltfinger (313) in eine Position verschwenkbar ist, welche im wesentlichen senkrecht zur Schaltstange (310) angeordnet ist.

30. Schaltvorrichtung nach einem der vorhergehenden Ansprüche, **dadurch gekennzeichnet, dass** ein Schaltfinger (313) zum Ein- und Auslegen eines Gangs vorgesehen ist.

31. Schaltvorrichtung nach einem der vorhergehenden Ansprüche, **dadurch gekennzeichnet, dass** ein Schaltfinger (313) zur Betätigung eines Schaltpakets bzw. zum Ein- und Auslegen von zwei Gängen vorgesehen ist, d. h., dass beispielsweise vier Gänge durch zwei Schaltfinger (313) schaltbar sind.

32. Schaltvorrichtung nach einem der vorhergehenden Ansprüche, **dadurch gekennzeichnet, dass** die Konvertierungsvorrichtung anstelle verschiebbarer Schaltstangen feststehende Schaltstangen enthält, auf denen verschiebbare Schaltmuffen angeordnet sind.

33. Schaltvorrichtung nach einem der Ansprüche 1 bis 32, **dadurch gekennzeichnet, dass** die Schaltvorrichtung handgesteuert und/oder steuermittelfrei ausgebildet ist.

34. Kraftfahrzeuggetriebe, **dadurch gekennzeichnet, dass** es eine Schaltvorrichtung nach einem der Ansprüche 1 bis 33 enthält.

35. Kraftfahrzeuggetriebe nach Anspruch 34, **dadurch gekennzeichnet, dass** es einen Doppelkupplungsradsatz mit nur einer Anfahrkupplung (22) enthält.

36. Kraftfahrzeugegetriebe nach Anspruch 34 oder 35, **dadurch gekennzeichnet, dass** es als Lastschaltgetriebe ausgebildet ist.

37. Kraftfahrzeugegetriebe nach Anspruch 34, 35 oder 36, **dadurch gekennzeichnet, dass** es als Gruppengetriebe ausgebildet ist.

38. Kraftfahrzeugegetriebe nach einem der Ansprüche 34 bis 37, **dadurch gekennzeichnet, dass** es handschaltbar ist.

## Claims

1. Shift mechanism for a multistage transmission, in particular for a motor vehicle, wherein, in the transmission, two non-consecutive ratio stages are assigned to at least one shift packet and a shift lever is provided for actuation of the shift packets, and wherein there is assigned to the shift lever a shift pattern in which, in essence, the shift positions of each two consecutive gears are opposite each other in shift tracks, and wherein the gears that are selectable within a shift track are assigned to different shift packets, **characterized in that** the shift lever (4) is connected to a shift-finger shaft (11, 311), and this shift-finger shaft can be displaced axially and pivoted radially by means of the shift lever (4), and at least one shift finger (13, 313) is assigned to the shift-finger shaft (11, 12, 311), and the shift finger (13, 313) is disposed on the shift-finger shaft (11, 12, 311) in such a way that, in neutral position, the shift finger (13, 313) does not extend perpendicularly relative to a shift rod (310), and the respective shift finger (313), upon swivelling in one direction, actuates the shift rod (310) and the shift packet and, upon swivelling of the shift finger (313) in the opposite direction, the shift finger (313) goes free and does not actuate the shift rod (310), the shift rod (310) being kinematically coupled to the shift finger (313) until the neutral position is attained again.

2. Shift mechanism according to Claim 1, **characterized in that** there is provided, between the shift lever (4) and the at least one shift packet (2), a conversion mechanism (8) which converts a movement of the shift lever (4) into a movement of a shift means, which engages a ratio stage (3) corresponding to the operated gear.

3. Shift mechanism according to either of Claims 1 or 2, **characterized in that** the conversion mechanism (8) is realized as a direct or indirect connection between the shift lever (4) and the at least one shift packet (2).

4. Shift mechanism according to any one of Claims 1, 2 or 3, **characterized in that** the conversion mechanism (8) is realized as a mechanical, hydraulic or pneumatic connection, or as a combination of at least two of the aforementioned connections.

5. Shift mechanism according to any one of Claims 1, 2, 3 or 4, **characterized in that** the conversion mechanism (8) is realized as shift linkages or as a cable/rope gearshift, or as a combination of both.

6. Shift mechanism according to any one of the preceding claims, **characterized in that** there is assigned to the shift lever (4) a shift pattern (6) which is realized in a H or multiple-H configuration in which, in essence, shift positions of adjacent ratio stages are opposite each other.

7. Shift mechanism according to any one of the preceding claims, **characterized in that** the shift lever (4) can shift consecutive ratio stages of the transmission (1) within a shift track (5), at least one of the ratio stages (3) being shifted by means of a shift packet (2) to which two non-consecutive ratio stages (3) have been assigned.

8. Shift mechanism according to any one of the preceding claims, **characterized in that** at least two shift packets (2) are assigned to each shift track (5).

9. Shift mechanism according to any one of the preceding claims, **characterized in that**, upon displacement of the shift lever (4) in at least one gear selection track (7) of the shift pattern (6), at least two shift packets (2) can be connected simultaneously to the shift lever (4) by means of shift means (9) connected to the shift packets (2).

10. Shift mechanism according to any one of the preceding claims, **characterized in that** the conversion mechanism comprises an inversion mechanism by which a movement of a shift means can be produced in the same direction as a shift movement of the shift lever in a shift track.

11. Shift mechanism according to Claim 10, **characterized in that** at least one further shift-finger shaft (12) is coupled to the shift-finger shaft (11).

12. Shift mechanism according to Claim 11, **characterized in that** the coupling of the shift-finger shafts (11, 12) is effected by means of gearwheels attached to the shafts.

13. Shift mechanism according to either of Claims 11 or 12, **characterized in that** the shift-finger shafts (11, 12) are disposed in one or more planes.

14. Shift mechanism according to any one of Claims 10 to 13, **characterized in that** the shift-finger shafts (11, 12) are coupled in such a way that a gear selection movement of the shift lever (4) displaces all shift-finger shafts (11, 12) in parallel and/or a shift movement of the shift lever (4) rotates adjacent shift-finger shafts (11, 12) in opposing directions/inversely.

15. Shift mechanism according to Claim 1, **characterized in that**, in at least one shift track (5), at least two shift fingers (13) of different shift-finger shafts (11, 12) engage in different shift rods (10).

16. Shift mechanism according to Claim 1, **characterized in that**, in at least one shift track (5), at least two shift fingers (13) of the same shift-finger shaft (11, 12) engage in different shift rods (10).

17. Shift mechanism according to any one of the preceding claims, **characterized in that**, upon rotation of the shift-finger shaft (11) in one direction of rotation, at least one shift finger (13) of the one shift-finger shaft (11, 12) is brought out of its engagement with the one shift rod (10), and at least one other shift finger (13) of the other shift-finger shaft (12, 11) displaces the other shift rod (10).

18. Shift mechanism according to Claim 17, **characterized in that**, upon the shift-finger shaft (11) being rotated in the opposite/inverse direction of rotation, at least one shift finger (13) of the other shift-finger shaft (12, 11) is brought out of its engagement with the other shift rod (10), and at least one shift finger (13) of the one shift-finger shaft (11, 12) displaces the one shift rod (10).

19. Shift mechanism according to any one of Claims 1 to 16, **characterized in that**, upon rotation of the shift-finger shaft (11) in one direction of rotation, at least one shift finger (13) of the one shift-finger shaft (11, 12) is brought out of its engagement with the one shift rod (10), and at least one other shift finger (13) of the same shift-finger shaft (12, 11) displaces the other shift rod (10).

20. Shift mechanism according to any one of Claims 1 to 16, **characterized in that**, upon rotation of the shift-finger shaft (11) in both directions of rotation, at least one shift finger (13) of a shift-finger shaft (11, 12) displaces a shift rod (10).

21. Shift mechanism according to any one of the preceding claims, **characterized in that** the contours of the shift rods (10) are of such design that the shift rods (10) can be shifted into either a shift position or a neutral position by means of the shift fingers (13).

22. Shift mechanism according to any one of the preceding claims, **characterized in that** the contour of the shift fingers (13) is of such design that the force transmission ratio can be set by means of the contour.

23. Shift mechanism according to any one of Claims 1 to 10, **characterized in that** at least one toothed segment (14) and at least one toothed rack (15) are provided for the purpose of transmitting the movement of the shift lever (4) to the shift means (9).

24. Shift mechanism according to any one of Claims 1 to 9, **characterized in that**, upon displacement of the shift lever (4) in a gear selection track (7) of the shift pattern (6), at least two shift packets (2) can be activated by means of shift arms connected to the shift packets.

25. Shift mechanism according to any one of Claims 1 to 10, **characterized in that** the inversion mechanism consists, in essence, of a shift-finger shaft (311) and a plurality of shift rods (310), the shift-finger shaft (311) being disposed substantially at right angles to the shift rods (310).

26. Shift mechanism according to Claim 25, **characterized in that** the shift rods (310) are disposed, in essence, in two planes on opposing sides of the shift-finger shaft (311) .

27. Shift mechanism according to either of Claims 25 or 26, **characterized in that** there are provided on the shift-finger shaft (311) shift fingers (313) which cooperate with shift grooves (327) in the shift rods (310) .

28. Shift mechanism according to Claim 1, **characterized in that** the shift lever is rigidly connected to the shift-finger shaft (311).

29. Shift mechanism according to Claim 1, **characterized in that**, for the purpose of engaging a gear through actuation of the shift lever, the respective shift finger (313) can be swivelled into a position which is substantially perpendicular relative to the shift rod (310).

30. Shift mechanism according to any one of the preceding claims, **characterized in that** a shift finger (313) is provided for engagement and disengagement of a gear.

31. Shift mechanism according to any one of the preceding claims, **characterized in that** a shift finger (313) is provided for actuation of a shift packet, or for engagement and disengagement of two gears, i.e., for example, four gears can be shifted by means of two shift fingers (313).

32. Shift mechanism according to any one of the preceding claims, **characterized in that** the conversion mechanism comprises, instead of displaceable shift rods, fixed shift rods on which displaceable shift sleeves are disposed.

33. Shift mechanism according to any one of Claims 1 to 32, **characterized in that** the shift mechanism is manually controlled and/or is realized without control means.

34. Motor-vehicle transmission, **characterized in that** the transmission comprises a shift mechanism according to any one of Claims 1 to 33.

35. Motor-vehicle transmission according to Claim 34, **characterized in that** the transmission comprises a double-clutch gear train having only one starting clutch (22).

36. Motor-vehicle transmission according to either of Claims 34 or 35, **characterized in that** the transmission is realized as a powershift transmission.

37. Motor-vehicle transmission according to any one of Claims 34, 35 or 36, **characterized in that** the transmission is realized as a group transmission.

38. Motor-vehicle transmission according to any one of Claims 34 to 37, **characterized in that** the transmission can be shifted manually.

## Revendications

1. Dispositif de commande pour une boîte de vitesses à étages multiples, en particulier pour un véhicule automobile, dans lequel, dans la boîte de vitesses, deux étages de rapport non consécutifs sont associés à au moins un paquet de commande, et un levier de vitesses est prévu pour l'actionnement des paquets de commande, et dans lequel, à ce levier de vitesses, est associée une grille de commande dans laquelle les positions de commande de deux vitesses consécutives sont face-à-face dans des rainures de commande et dans lequel des vitesses qui peuvent sélectionnées dans une même rainure de commande sont associées à des paquets de commande différents, **caractérisé en ce que** le levier de vitesses (4) est relié à un arbre à doigts de commande (11, 311) et cet arbre peut être déplacé en translation axiale et être tourné dans un plan radial, **en ce qu'**à l'arbre à doigts de commande (11, 12, 311) est associé au moins un doigt de commande (13, 313), **en ce que** le doigt de commande (13, 313) est agencé sur l'arbre à doigts de commande (11, 12, 311) de telle manière que, dans la position de point mort, le doigt de commande (13, 313) ne s'étende pas perpendiculairement à une barre de commande (310), et **en ce que**, lorsqu'il tourne dans un sens, le doigt de commande (313) considéré actionne la barre de commande (310) ou le paquet de commande, tandis que, lorsque le doigt de commande (313) tourne dans le sens inverse, le doigt de commande (313) se déplace librement et n'actionne pas la barre de commande (310), la barre de commande (310) étant accouplée cinématiquement au doigt de commande (313), jusqu'au moment où la position de point mort est de nouveau atteinte.

2. Dispositif de commande selon la revendication 1, **caractérisé en ce qu**'il est prévu, entre le levier de vitesses (4) et l'au moins un paquet de commande (2), un dispositif de conversion (8) qui convertit un mouvement du levier de vitesses (4) en un mouvement d'un moyen de commande qui engage un étage de rapport (3) correspondant à la vitesse passée.

3. Dispositif de commande selon la revendication 1 ou 2, **caractérisé en ce que** le dispositif de conversion (8) est constitué par une liaison directe ou indirecte entre le levier de vitesses (4) et l'au moins un paquet de commande (2).

4. Dispositif de commande selon la revendication 1, 2 ou 3, **caractérisé en ce que** le dispositif de conversion (8) est constitué par une liaison mécanique, hydraulique ou pneumatique ou par une combinaison d'au moins deux des liaisons précitées.

5. Dispositif de commande selon la revendication 1, 2, 3 ou 4, **caractérisé en ce que** le dispositif de conversion (8) est constitué par une tringlerie de commande ou par une commande à câble ou à corde ou par une combinaison des deux.

6. Dispositif de commande selon l'une des revendications précédentes, **caractérisé en ce qu'**au levier de vitesses (4) est associée une grille de commande (6) qui a une configuration en H ou en H multiples, dans laquelle les positions de commande d'étages de rapport voisins se font sensiblement face.

7. Dispositif de commande selon l'une des revendications précédentes, **caractérisé en ce qu**'avec le levier de vitesses (4) dans une rainure de commande (5), on peut passer des étages de rapport consécutifs de la boîte de vitesses (1), auquel cas au moins un des étages de rapport (3) est commandé au moyen d'un paquet de commande (2) auquel sont associés deux étages de rapport (3) non consécutifs.

8. Dispositif de commande selon l'une des revendications précédentes, **caractérisé en ce qu**'à chaque rainure de commande (5) sont associés au moins deux paquets de commande (2).

9. Dispositif de commande selon l'une des revendications précédentes, **caractérisé en ce que**, lorsqu'on déplace le levier de vitesses (4) en translation dans au moins une rainure de sélection (7) de la grille de commande (8), au moins deux paquets de commande (2) peuvent être reliés simultanément au levier de vitesses (4) à l'aide de moyens de commande (9) reliés aux paquets de commande (2).

10. Dispositif de commande selon l'une des revendications précédentes, **caractérisé en ce que** le dispositif de conversion comprend un dispositif d'inversion qui peut produire un mouvement d'un moyen de commande de même sens qu'un mouvement de commande du levier de vitesses dans une rainure de commande.

11. Dispositif de commande selon la revendication 10, **caractérisé en ce que,** à l'arbre à doigts de commande (11) est couplé au moins un autre arbre à doigts de commande (12).

12. Dispositif de commande selon la revendication 11, **caractérisé en ce que** le couplage des arbres à doigts de commande (11, 12) est réalisé au moyen de roues dentées fixées sur les arbres.

13. Dispositif de commande selon la revendication 11 ou 12, **caractérisé en ce que** la disposition des arbres à doigts de commande (11, 12) se fait dans un ou plusieurs plans.

14. Dispositif de commande selon l'une des revendications 10 à 13, **caractérisé en ce que** les arbres à doigts de commande (11, 12) sont couplés de manière qu'un mouvement de sélection du levier de vitesses (4) déplace tous les arbres à doigts de commande (11, 12) en translation parallèle et/ou qu'un mouvement de commande de passage du levier de vitesses (4) fait tourner des arbres à doigts de commande (11, 12) voisins en sens inverse l'un de l'autre/à l'inverse.

15. Dispositif de commande selon la revendication 1, **caractérisé en ce que**, dans au moins une rainure de commande (5), au moins deux doigts de commande (13) appartenant à différents arbres à doigts de commande (11, 12) sont en prise dans différentes barres de commande (10).

16. Dispositif de commande selon la revendication 1, **caractérisé en ce que**, dans au moins une rainure de commande (5), au moins deux doigts de commande (13) du même arbre à doigts de commande (11, 12) sont en prise dans différentes barres de commande (10).

17. Dispositif de commande selon l'une des revendications précédentes, **caractérisé en ce que**, lorsqu'on fait tourner l'arbre à doigts de commande (11) dans un sens de rotation, au moins un doigt de commande (13) d'un premier arbre à doigts de commande (11, 12) est mis hors de prise avec une barre de commande (10) et au moins un autre doigt de commande (13) de l'autre arbre à doigts de commande (12, 11) déplace l'autre barre de commande (10) en translation.

18. Dispositif de commande selon la revendication 17, **caractérisé en ce que**, lorsqu'on fait tourner l'arbre à doigts de commande (11) dans le sens de rotation inverse, au moins un doigt de commande (13) de l'autre arbre à doigts de commande (12, 11) est mis hors de prise avec l'autre barre de commande (10) et au moins un doigt de commande (13) du premier arbre à doigts de commande (11, 12) déplace une barre de commande (10) en translation.

19. Dispositif de commande selon l'une des revendications 1 à 16, **caractérisé en ce que**, lorsqu'on fait tourner l'arbre à doigts de commande (11) dans un sens de rotation, au moins un doigt de commande (13) d'un premier arbre de commande (11, 12) est mis en hors de prise avec l'une des barres de commande (10) et au moins un autre doigt de commande du même arbre à doigts de commande (11, 12) déplace l'autre barre de commande (10) en translation.

20. Dispositif de commande selon l'une des revendications 1 à 16, **caractérisé en ce que**, lorsqu'on fait tourner l'arbre à doigts de commande (11) dans les deux sens de rotation, au moins un doigt de commande (13) d'un arbre à doigts de commande (11,12) déplace une barre de commande (10) en translation.

21. Dispositif de commande selon l'une des revendications précédentes, **caractérisé en ce que** les profils des barres de commande (10) sont configurés de manière qu'au moyen des doigts de commande (13), il est possible de placer les barres de commande (10), soit dans une position de commande, soit dans une position de point mort.

22. Dispositif de commande selon l'une des revendications précédentes, **caractérisé en ce que** le profil des doigts de commande (13) est configuré de manière que le rapport de transmission de force puisse être établi par l'intermédiaire du profil.

23. Dispositif de commande selon l'une des revendications 1 à 10, **caractérisé en ce que**, pour transmettre le mouvement du levier de vitesses (4) aux moyens de commande (9), il est prévu au moins un secteur denté (14) et au moins une crémaillère (15).

24. Dispositif de commande selon l'une des revendications 1 à 9, **caractérisé en ce que,** lors de la translation du levier de vitesses (4) dans une rainure de sélection (7) de la grille de commande (6), au moins deux paquets de commande (2) peuvent être sollicités au moyen de consoles de commande reliées aux paquets de commande.

25. Dispositif de commande selon l'une des revendications 1 à 10, **caractérisé en ce que** le dispositif d'inversion est essentiellement composé d'un arbre à doigts de commande (311) et de plusieurs barres de commande (310), l'arbre à doigts de commande (311) étant disposé sensiblement perpendiculairement aux barres de commande (310).

26. Dispositif de commande selon la revendication 25, **caractérisé en ce que** les barres de commande (310) sont sensiblement disposées en deux plans, sur des côtés opposés de l'arbre à doigts de commande (311).

27. Dispositif de commande selon la revendication 25 ou 26, **caractérisé en ce que,** sur l'arbre à doigts de commande (311), sont prévus des doigts de commande (313) qui coopèrent avec des rainures de commande (327) formées dans les barres de commande (310).

28. Dispositif de commande selon la revendication 1, **caractérisé en ce que** le levier de vitesses est relié rigidement à l'arbre à doigts de commande (311).

29. Dispositif de commande selon la revendication 1, **caractérisé en ce que**, pour engager une vitesse par l'actionnement du levier de vitesses, le doigt de commande (313) correspondant peut être tourné dans une position qui est disposée sensiblement perpendiculairement à la barre de commande (310).

30. Dispositif de commande selon l'une des revendications précédentes, **caractérisé en ce qu**'un doigt de commande (313) est prévu pour l'engagement et le désengagement d'une vitesse.

31. Dispositif de commande selon l'une des revendications précédentes, **caractérisé en ce qu**'un doigt de commande (313) est prévu pour l'actionnement d'un paquet de commande ou pour l'engagement et le désengagement de deux vitesses, c'est-à-dire que, par exemple quatre vitesses peuvent être passées par deux doigts de commande (313).

32. Dispositif de commande selon l'une des revendications précédentes, **caractérisé en ce que** le dispositif de conversion comprend, en remplacement de barres de commande mobiles en translation, des barres de commande fixes sur lesquelles sont disposés des manchons de commande mobiles en translation.

33. Dispositif de commande selon l'une des revendications 1 à 32, **caractérisé en ce que** le dispositif de commande est commandé à la main et/ou est dépourvu de moyens de commande.

34. Boîte de vitesses de véhicule automobile, **caractérisée en ce qu'**elle comprend un dispositif de commande selon l'une des revendications 1 à 33.

35. Boîte de vitesses de véhicule automobile selon la revendication 34, **caractérisée en ce qu**'elle comprend un jeu de roues d'un embrayage double possédant seulement un embrayage de démarrage (22).

36. Boîte de vitesses de véhicule automobile selon la revendication 34 ou 35, **caractérisée en ce qu**'elle constituée par une boîte de vitesses à changement de vitesse en charge.

37. Boîte de vitesses de véhicule automobile selon la revendication 34, 35 ou 36, **caractérisée en ce qu**'elle est constituée par une boîte de transfert.

38. Boîte de vitesses de véhicule automobile selon l'une des revendications 34 à 37, **caractérisée en ce qu'**elle peut être commandée à la main.
